# EUROPEAN PATENT APPLICATION

(11) **EP 4 651 538 A1**
(43) Date of publication of application: **19.11.2025**
(21) Application number: 24756816.5
(22) Date of filing: 09.02.2024
(51) Int. Cl.: H04W 16/26, H04W 36/08, H04W 76/27, H04W 92/20

(54) **COMMUNICATION METHOD AND RELAY DEVICE**

(30) Priority: 13.02.2023 US 202363445096 P
(71) Applicant: Kyocera Corporation, Kyoto-shi, Kyoto 612-8501 (JP)
(72) Inventor: FUJISHIRO, Masato, Kyoto-shi, Kyoto 612-8501 (JP); CHANG, Henry, San Diego, California 92123 (US); KALHAN, Amit, San Diego, California 92123 (US)
(74) Representative: Viering, Jentschura & Partner mbB Patent- und Rechtsanwälte
(86) International application number: PCT/JP2024/004566
(87) International publication number: WO 2024/171971

(57) **Abstract**

A communication method using a relay apparatus including a relay device configured to perform a relay operation of relaying a radio signal transmitted between a network and a user equipment, and a control terminal configured to receive a control signal used for control of the relay device from the network, the communication method including the steps of: performing, by the control terminal, cell reselection to a second cell different from a first cell, when the control terminal is in a radio resource control (RRC) idle state or an RRC inactive state in the first cell and the relay device is on; and turning off, by the relay apparatus, the relay device based on the cell reselection.

## Description

### TECHNICAL FIELD

The present disclosure relates to a communication method and a relay apparatus used in a mobile communication system.

### BACKGROUND OF INVENTION

In recent years, a mobile communication system of the fifth generation (5G) has been attracting attention. New Radio (NR), which is a radio access technology of the 5G system, is capable of wide-band transmission via a high frequency band as opposed to Long Term Evolution (LTE), which is a fourth-generation radio access technology.

Since radio signals (radio waves) in the high frequency band such as a millimeter wave band or a terahertz wave band have high rectilinearity, reduction of coverage of a base station is a problem. In order to solve such a problem, a repeater apparatus that is a type of relay apparatus relaying radio signals between the network and a user equipment and can be controlled from a network is attracting attention (see, for example, Non-Patent Literature 1). Such a repeater apparatus can extend the coverage of the base station while suppressing occurrence of interference by, for example, amplifying a radio signal received from the base station and transmitting the radio signal through directional transmission. Such a repeater apparatus is referred to as a network-controlled repeater (NCR).

### CITATION LIST

### NON-PATENT LITERATURE

Non-Patent Literature 1: 3GPP Contribution: RP-213700, "New SI: Study on NR Network-controlled Repeaters"

### SUMMARY

A communication method according to a first aspect is a communication method using a relay apparatus including a relay device configured to perform a relay operation of relaying a radio signal transmitted between a network and a user equipment, and a control terminal configured to receive a control signal used for control of the relay device from the network, the communication method including: causing the relay device to continue the relay operation, when the control terminal transitions from a radio resource control (RRC) connected state to an RRC idle state or an RRC inactive state in a first cell; performing, by the control terminal, cell reselection to a second cell different from the first cell when the control terminal is in the RRC idle state or the RRC inactive state in the first cell; and causing, by the relay apparatus, the relay device to stop the relay operation, based on the cell reselection.

A relay apparatus according to a second aspect includes: a relay device configured to perform a relay operation of relaying a radio signal transmitted between a network and a user equipment; and a control terminal configured to receive a control signal used for control of the relay device from the network, in which the control terminal: causes the relay device to continue the relay operation, when the control terminal transitions from a radio resource control (RRC) connected state to an RRC idle state or an RRC inactive state in a first cell; performs cell reselection to a second cell different from the first cell when the control terminal is in the RRC idle state or the RRC inactive state in the first cell; and causes the relay device to stop the relay operation, based on the cell reselection.

### BRIEF DESCRIPTION OF THE DRAWINGS

FIG. 1 is a diagram illustrating a configuration of a mobile communication system according to an embodiment.
FIG. 2 is a diagram illustrating a configuration of a protocol stack of a radio interface of a user plane handling data.
FIG. 3 is a diagram illustrating a configuration of a protocol stack of a radio interface of a control plane handling signaling (control signal).
FIG. 4 is a diagram illustrating an example of an application scenario of an NCR apparatus (relay apparatus) according to an embodiment.
FIG. 5 is a diagram illustrating an example of an application scenario of the NCR apparatus according to the embodiment.
FIG. 6 is a diagram illustrating an example of a control method for the NCR apparatus according to the embodiment.
FIG. 7 is a diagram illustrating an example of a configuration of a protocol stack in a mobile communication system including the NCR apparatus according to the embodiment.
FIG. 8 is a diagram illustrating a specific example of a configuration of a mobile communication system 1 having an NCR apparatus according to the embodiment.
FIG. 9 is a diagram illustrating an example of the configuration of the NCR apparatus according to the embodiment.
FIG. 10 is a diagram illustrating a configuration of a user equipment (UE) according to the embodiment.
FIG. 11 is a diagram illustrating an example of a configuration of a gNB (base station) according to the embodiment.
FIG. 12 is a diagram illustrating a general cell reselection procedure.
FIG. 13 is a diagram illustrating an operation according to a first embodiment.
FIG. 14 is a diagram illustrating an example of an operation of an NCR apparatus according to the first embodiment.
FIG. 15 is a diagram illustrating an example of an operation of an NCR apparatus according to a first variation of the first embodiment.
FIG. 16 is a diagram illustrating an example of an operation of an NCR apparatus according to a second variation of the first embodiment.
FIG. 17 is a diagram illustrating an example of an operation of a mobile communication system according to a third variation of the first embodiment.
FIG. 18 is a diagram illustrating an example of an operation according to a second embodiment.
FIG. 19 is a diagram illustrating another example of an operation according to the second embodiment.
FIG. 20 is a diagram illustrating an example of an operation of an NCR apparatus according to the second embodiment.
FIG. 21 is a diagram illustrating an example of an operation of the NCR apparatus according to the second embodiment.
FIG. 22 is a diagram illustrating a RIS apparatus (relay apparatus) according to a third embodiment.
FIG. 23 is a diagram illustrating the RIS apparatus according to the third embodiment.

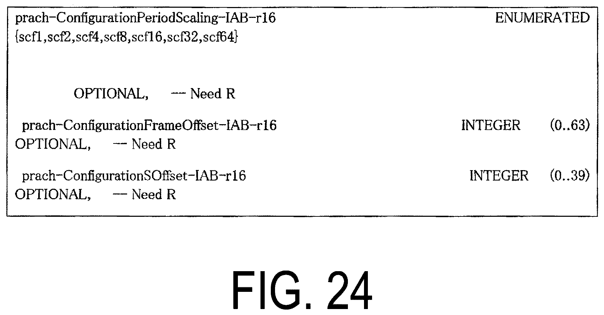

FIG. 24 is a diagram illustrating a specific PRACH scene (RO) for avoiding the possibility of collision.

### DESCRIPTION OF EMBODIMENTS

A mobile communication system according to an embodiment is described with reference to the drawings. In the description of the drawings, the same or similar parts are denoted by the same or similar reference signs.

### (1) First Embodiment

A first embodiment will be described first. A relay apparatus according to an embodiment is a repeater apparatus (that is, an NCR apparatus) that can be controlled from a network.

### (1.1) Overview of Mobile Communication System

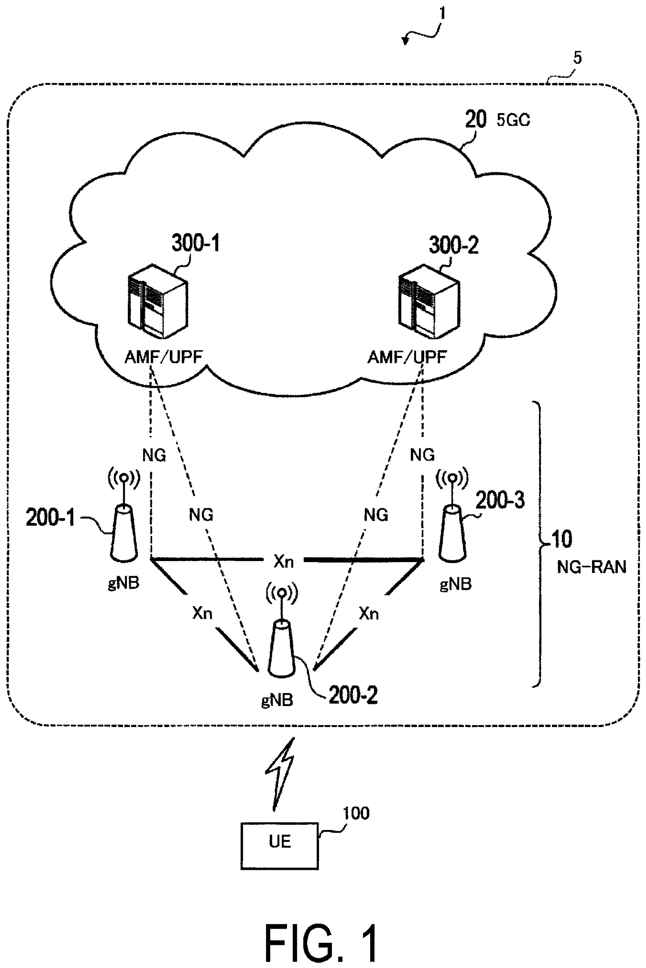

FIG. 1 is a diagram illustrating a configuration of a mobile communication system according to an embodiment.

The mobile communication system 1 complies with the 5th Generation System (5GS) of the 3rd Generation Partnership Project (3GPP) (registered trademark; the same applies hereinafter). Hereinafter, 5GS will be described by way of example, but a long term evolution (LTE) system may be at least partially applied to the mobile communication system. Alternatively, a sixth generation (6G) system may be at least partially applied to the mobile communication system.

The mobile communication system 1 includes a user equipment (UE) 100, a 5G radio access network (NG-RAN: Next Generation Radio Access Network) 10, and a 5G core network (5GC: 5G Core Network) 20. Hereinafter, the NG-RAN 10 may be simply referred to as a RAN 10. The 5GC 20 may be simply referred to as a core network (CN) 20. The RAN 10 and the CN 20 constitute a network 5 of the mobile communication system 1.

The UE 100 is a mobile wireless communication apparatus. The UE 100 may be any apparatus as long as the UE 100 is used by a user. Examples of the UE 100 include a mobile phone terminal (including a smartphone) and/or a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes a base station (referred to as "gNB" in the 5G system) 200. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter, simply referred to as a "frequency").

The gNB 200 may be functionally divided into a central unit (CU) and a distributed unit (DU). The CU controls the DU. The CU is a unit including upper layers included in a protocol stack described below, such as an RRC layer, an SDAP layer, and a PDCP layer, for example. The CU is connected to a core network via an NG interface which is a backhaul interface. The CU is connected to an adjacent base station via the Xn interface, which is an inter-base station interface. The DU forms a cell. The DU 202 is a unit including lower layers included in the protocol stack described below, such as an RLC layer, a MAC layer, and a PHY layer, for example. The DU is connected to the CU via an F1 interface which is a fronthaul interface.

The gNB can be connected to an evolved packet core (EPC) corresponding to a core network of LTE. An LTE base station can also be connected to the 5GC. The LTE base station and the gNB can be connected via an inter-base station interface.

The 5GC 20 includes an access and mobility management function (AMF) and a user plane function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

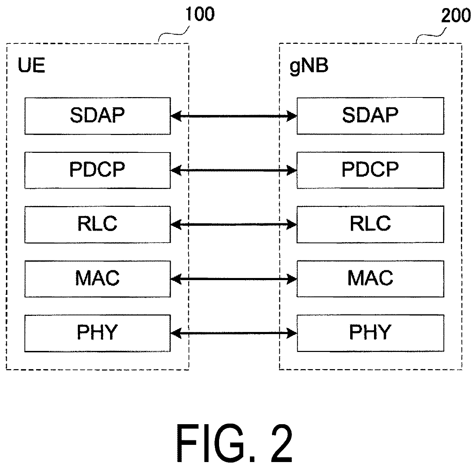

FIG. 2 is a diagram illustrating a configuration of a protocol stack of a radio interface of a user plane handling data.

The user plane radio interface protocol includes a physical (PHY) layer, a medium access control (MAC) layer, a radio link control (RLC) layer, a packet data convergence protocol (PDCP) layer, and a service data adaptation protocol (SDAP) layer.

The PHY layer performs encoding/decoding, modulation/demodulation, antenna mapping/demapping, and resource mapping/demapping. Data and control information are transmitted between the PHY layer of the UE 100 and the PHY layer of the gNB 200 via a physical channel. The PHY layer of the UE 100 receives downlink control information (DCI) transmitted from the gNB 200 over a physical downlink control channel (PDCCH). Specifically, the UE 100 performs blind decoding of PDCCH using a radio network temporary identifier (RNTI) and acquires successfully decoded DCI as DCI addressed to the UE. CRC bits scrambled by the RNTI are added to the DCI transmitted from the gNB 200.

The gNB 200 transmits a synchronization signal block (SSB: Synchronization Signal/PBCH block). For example, the SSB includes four consecutive Orthogonal Frequency Division Multiplex (OFDM) symbols, and a primary synchronization signal (PSS), a secondary synchronization signal (SSS), a physical broadcast channel (PBCH)/master information block (MIB), and a demodulation reference signal (DMRS) of the PBCH are disposed. A bandwidth of the SSB is, for example, a bandwidth of 240 consecutive subcarriers, that is, 20RB.

The MAC layer performs data priority control, retransmission processing using hybrid automatic repeat reQuest (HARQ), random access procedure, and the like.
Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the receiving side using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between IP flows, which are units for quality of service (QoS) control in the core network, and radio bearers, which are units for QoS control in an access stratum (AS). Note that, when the RAN is connected to the EPC, the SDAP need not be provided.

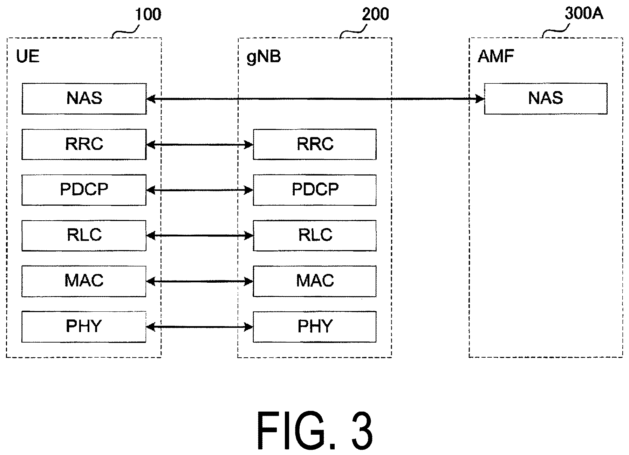

FIG. 3 is a diagram illustrating a configuration of a protocol stack of a radio interface of a control plane handling signaling (a control signal).

The protocol stack of the radio interface of the control plane includes a Radio Resource Control (RRC) layer and a Non-Access Stratum (NAS) layer instead of the SDAP layer illustrated in FIG. 2.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When a connection (RRC connection) between the RRC of the UE 100 and the RRC of the gNB 200 is present, the UE 100 is in an RRC connected state. When no connection (RRC connection) between the RRC of the UE 100 and the RRC of the gNB 200 is present, the UE 100 is in an RRC idle state. When the connection between the RRC of the UE 100 and the RRC of the gNB 200 is suspended, the UE 100 is in an RRC inactive state.

The NAS layer, which is located above the RRC layer, performs session management, mobility management, and the like. NAS signaling is transmitted between the NAS layer of the UE 100 and the NAS layer of an AMF 300A. The UE 100 includes an application layer other than the protocol of the radio interface. A layer lower than the NAS layer is referred to as an AS layer.

### (1.2) Example of Application Scenario of Relay Apparatus

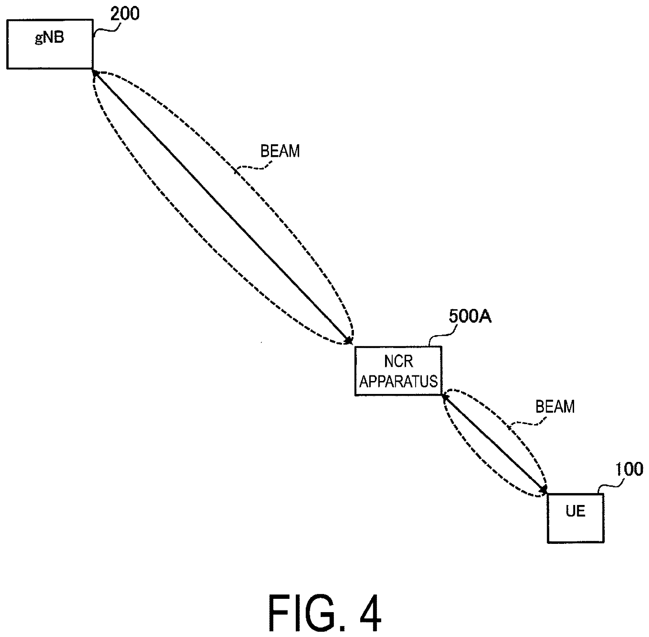

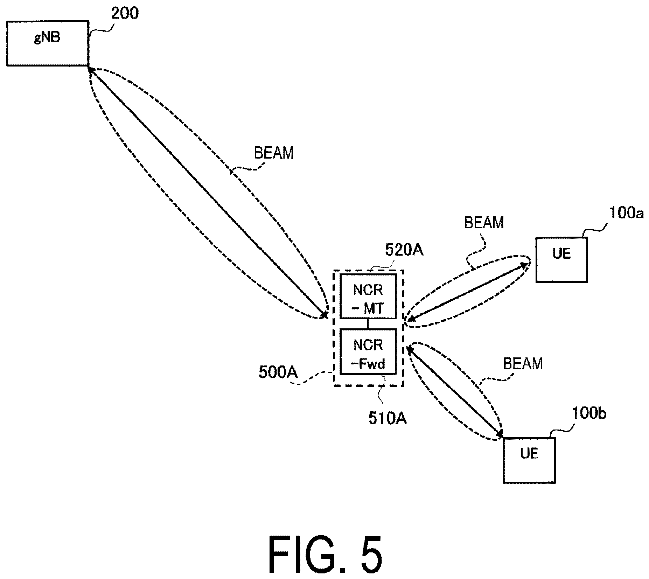

FIGs. 4 and 5 are diagrams showing an example of an application scenario of an NCR apparatus according to an embodiment.

The 5G/NR is capable of wide-band transmission via a high frequency band compared to the 4G/LTE. Since radio signals in the high frequency band such as a millimeter wave band or a terahertz wave band have high rectilinearity, a problem is reduction of coverage of the gNB 200. In FIG. 4, the UE 100 may be located outside a coverage area of the gNB 200, for example, outside an area where the UE 100 can receive radio signals directly from the gNB 200. The UE 100 may not communicate with the gNB 200 within a line of sight because of obstacles existing between the gNB 200 and the UE 100.

As illustrated in FIG. 4, a repeater apparatus (500A) that is a type of relay apparatus that relays radio signals between the gNB 200 and the UE 100, which is the NCR apparatus 500A that can be controlled from a network, is introduced into the mobile communication system 1. Such a repeater apparatus may be called a smart repeater apparatus.

For example, the NCR apparatus 500A amplifies a radio signal (radio wave) received from the gNB 200 and transmits the radio signal through directional transmission. To be specific, the NCR apparatus 500A receives a radio signal transmitted by the gNB 200 through beamforming. The NCR apparatus 500A amplifies the received radio signal without demodulation and modulation and transmits the amplified radio signal through the directional transmission. Here, the NCR apparatus 500A may transmit the radio signal with a fixed directivity (beam). The NCR apparatus 500A may transmit a radio signal with a variable (adaptive) directional beam. This can efficiently extend the coverage of the gNB 200.

Also, as illustrated in FIG. 5, a new UE (hereinafter referred to as "NCR-MT (Mobile termination)") 100B, which is a type of control terminal for controlling the NCR apparatus 500A, is introduced. That is, the NCR apparatus 500A includes an NCR-Fwd (Forward) 510A, which is a type of a relay device that relays a radio signal transmitted between the gNB 200 and the UE 100, specifically, changes a propagation state of the radio signal without demodulating or modulating the radio signal, and an NCR-MT 520A that performs wireless communication with the gNB 200 to control the NCR-Fwd 510A. Thus, the NCR-MT 520A controls the NCR apparatus 500A in cooperation with the gNB 200 by establishing a wireless connection to the gNB 200 and performing wireless communication to the gNB 200. Accordingly, efficient coverage extension can be realized using the NCR apparatus 500A. The NCR-MT 520A controls the NCR apparatus 500A in accordance with control from the gNB 200. The NCR-MT 520A also has the same function as that of the UE 100.

The NCR-MT 520A may be configured separately from the NCR-Fwd 510A. For example, the NCR-MT 520A may be located near the NCR-Fwd 510A and may be electrically connected to the NCR-Fwd 510A. The NCR-MT 520A may be connected to the NCR-Fwd 510A by wire or wireless. Alternatively, the NCR-MT 520A may be configured integrally with the NCR-Fwd 510A. The NCR-MT 520A and the NCR-Fwd 510A may be fixedly installed at a coverage edge (cell edge) of the gNB 200, or on a wall surface or window of any building, for example. The NCR-MT 520A and the NCR-Fwd 510A may be installed, for example, in a vehicle or the like and may be mobile. One NCR-MT 520A may control the plurality of NCR-Fwds 510A.

The configuration is not limited to a configuration in which the NCR-MT 520A directly controls one or more NCR-Fwds 510A, and may be configuration in which the NCR-MT 520A indirectly controls one or more NCR-Fwds 510A. For example, the NCR-MT 520A may control one or more NCR-Fwds 510A via an upper layer (for example, an application layer).

In the example illustrated in FIG. 5, the NCR apparatus 500A (NCR-Fwd 510A) dynamically or quasi-statically changes a beam to be transmitted or received. For example, the NCR-Fwd 510A forms a beam toward each of a UE 100a and a UE 100b. The NCR-Fwd 510A may also form a beam toward the gNB 200. For example, in a communication resource between the gNB 200 and the UE 100a, the NCR-Fwd 510A transmits a radio signal received from the gNB 200 toward the UE 100a through beamforming and/or transmits a radio signal received from the UE 100a toward the gNB 200 through beamforming. In a communication resource between the gNB 200 and the UE 100b, the NCR-Fwd 510A transmits the radio signal received from the gNB 200 toward the UE 100b through beamforming and/or transmits the radio signal received from the UE 100b toward the gNB 200 through beamforming. Instead of or in addition to the beamforming, the NCR-Fwd 510A may perform null forming (so-called null steering) toward the UE 100 which is not a communication partner (not illustrated) and/or a neighbor gNB 200 (not illustrated) to curb interference.

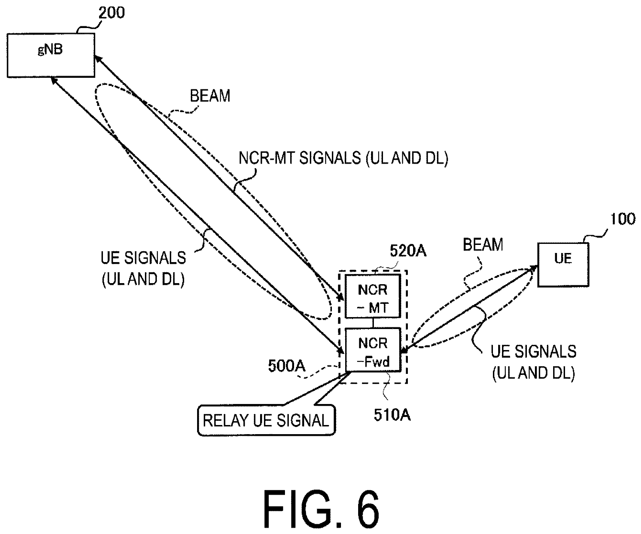

FIG. 6 is a diagram illustrating an example of a control method for the NCR apparatus 500A according to the embodiment. As illustrated in FIG. 6, the NCR-Fwd 510A relays radio signals (also referred to as "UE signals") between the gNB 200 and the UE 100. The UE signal includes an uplink signal transmitted from the UE 100 to the gNB 200 (referred to as "UE-UL signal") and a downlink signal transmitted from the gNB 200 to the UE 100 (referred to as "UE-DL signal"). The NCR-Fwd 510A relays the UE-UL signal from the UE 100 to the gNB 200 and relays the UE-DL signal from the gNB 200 to the UE 100. The radio link between the NCR-Fwd 510A and the UE 100 is also referred to as an "access link". The radio link between the NCR-Fwd 510A and the gNB 200 is also referred to as a "backhaul link".

The NCR-MT 520A transmits and receives a radio signal (herein referred to as an "NCR-MT signal") to and from the gNB 200. The NCR-MT signal includes an uplink signal transmitted from the NCR-MT 520A to the gNB 200 (referred to as an "NCR-MT-UL signal"), and a downlink signal transmitted from the gNB 200 to the NCR-MT 520A (referred to as an "NCR-MT-DL signal"). The NCR-MT-DL signal includes signaling for controlling the NCR apparatus 500A (for example, an NCR control signal). A wireless link between the NCR-MT 520A and the gNB 200 is also referred to as a "control link."

The gNB 200 directs a beam to the NCR-MT 520A based on the NCR-MT-UL signal from the NCR-MT 520A. Since the NCR apparatus 500A and the NCR-MT 520A are co-located, the beam is also eventually directed to the NCR-Fwd 510A when the backhaul link and the control link have the same frequency and the gNB 200 directs a beam to the NCR-MT 520A. The gNB 200 transmits the NCR-MT-DL signal and the UE-DL signal using the beam. The NCR-MT 520A receives the NCR-MT-DL signal. When the NCR-Fwd 510A and the NCR-MT 520A are at least partially integrated, a function (for example, antennas) for transmitting or receiving, or relaying UE signals and/or NCR-MT signals may be integrated in the NCR-Fwd 510A and the NCR-MT 520A. The beam includes a transmission beam and/or a reception beam. The beam is a general term for transmission and/or reception under control for maximizing power of a transmission wave and/or a reception wave in a specific direction by adjusting/adapting an antenna weight or the like.

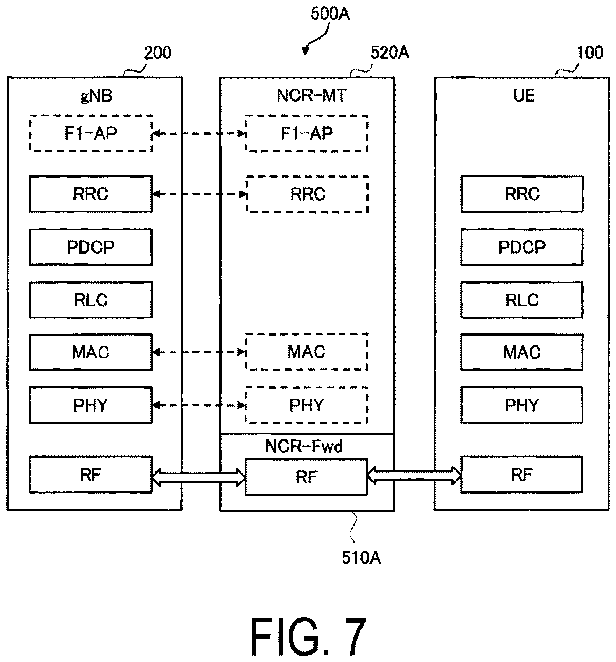

FIG. 7 is a diagram illustrating an example of a configuration of a protocol stack in the mobile communication system 1 having the NCR apparatus 500A according to an embodiment. The NCR-Fwd 510A relays a radio signal transmitted and received between the gNB 200 and the UE 100. The NCR-Fwd 510A has a Radio Frequency (RF) function of amplifying and relaying a received radio signal, and performs directional transmission through beamforming (for example, analog beamforming).

The NCR-MT 520A includes at least one layer (entity) selected from the group consisting of PHY, MAC, RRC, and application protocol (F1-AP). The F1-AP is a type of a fronthaul interface. The NCR-MT 520A exchanges signaling with the gNB 200 using at least one of PHY, MAC, RRC, and F1-AP. When the NCR-MT 520A is a type or part of a base station, the NCR-MT 520A may exchange signaling with the gNB 200 using an Xn AP (Xn-AP), which is an interface between base stations. The NCR-MT 520A may also include a NAS layer (entity). The NAS layer allows the NCR-MT 520A to exchange signaling with the AMF 300A. The NAS layer may constitute an upper layer for the NCR-MT 520A.

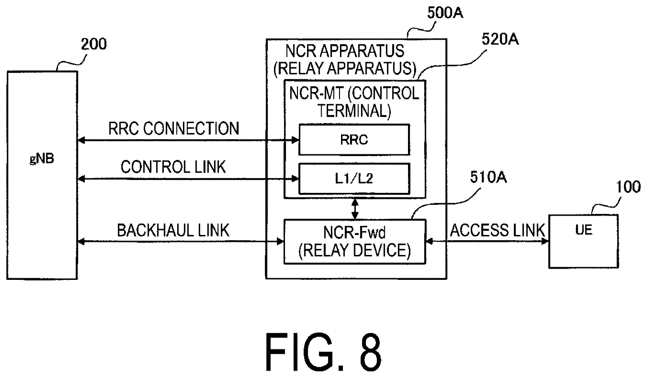

FIG. 8 is a diagram illustrating a specific example of a configuration of the mobile communication system 1 including the NCR apparatus 500A according to the embodiment.

A backhaul link is established between the gNB 200 and the NCR-Fwd 510A. An access link is established between the UE 100 and the NCR-Fwd 510A. The NCR-Fwd 510A relays a radio signal transmitted between the gNB 200 and the UE 100 via the backhaul link and the access link. The NCR-Fwd 510A changes a propagation state of the radio signal without demodulating or modulating the radio signal.

Further, a control link is established between the gNB 200 and layer 1 and/or layer 2 (L1/L2) of the NCR-MT 520A. The L1/L2 of the NCR-MT 520A transmits and receives L1/L2 signaling to and from the gNB 200 via the control link. An RRC connection is established between the gNB 200 and the RRC of the NCR-MT 520A. The RRC of the NCR-MT 520A transmits and receives an RRC message to and from the gNB 200 via the RRC connection. The NCR-MT 520A receives downlink signaling (also referred to as an "NCR control signal" or simply "control signal") from the gNB 200 via the RRC connection and/or the control link.

The gNB 200 (transmitter 210) transmits the NCR control signal to the NCR-MT 520A. The NCR control signal may be an RRC message, which is a control signal of the RRC layer (that is, layer 3). The NCR control signal may be a MAC control element (CE), which is a control signal of the MAC layer (that is, layer 2). The NCR control signal may be downlink control information (DCI), which is a control signal of the PHY layer (that is, layer 1). The NCR control signal may be UE-specific signaling. The NCR control signal may be broadcast signaling. The NCR control signal may be a fronthaul message (for example, F1-AP message). When the NCR-MT 520A is a type or part of a base station, the NCR-MT 520A may communicate with the gNB 200 via an AP of Xn (Xn-AP), which is an inter-base station interface.

Hereinafter, the NCR control signal transmitted in the RRC message (and/or MAC CE) and used for static or semi-static control of the NCR-Fwd 510A is also referred to as "NCR configuration information" or simply "configuration information". Here, the RRC message may be an RRC reconfiguration message. The NCR configuration information includes, for example, information for configuring ON/OFF of the NCR-Fwd 510A. The NCR configuration information may include, for example, information for semi-static beam configuration of the NCR-Fwd 510A.

Meanwhile, the NCR control signal transmitted in the L1/L2 signaling, that is, the DCI (and/or MAC CE) and used for dynamic control of the NCR-Fwd 510A is also referred to as "NCR control information" or simply "control information". The NCR control information may be referred to as side control information (SCI). Cyclic redundancy code (CRC) bits of the PDCCH carrying the NCR control information are scrambled by a newly introduced dedicated RNTI. The dedicated RNTI is also referred to as "NCR-RNTI". The NCR control information may include, for example, information for dynamic beam control of the NCR-Fwd 510A. The NCR configuration information may include information for instructing dynamic On/Off of the NCR-Fwd 510A.

For example, when the NCR-MT 520A is in an RRC connected state, the NCR apparatus 500A can turn on or off the NCR-Fwd 510A in accordance with the NCR control information (SCI) received from the gNB 200. On the other hand, after the NCR-MT 520A transitions to an RRC inactive state, the NCR apparatus 500A can turn on or off the NCR-Fwd 510A in accordance with the latest (last) configuration information received from the gNB 200.

Further, the NCR control signal (for example, NCR configuration information by RRC and/or NCR control information by L1/L2 signaling) held by the NCR apparatus 500A (NCR-MT 520A) may be referred to as an NCR-Fwd context.

Also, when a radio link failure (RLF) with the gNB 200 is detected by the NCR-MT 520A, the NCR-MT 520A executes cell selection and triggers RRC connection re-establishment (also referred to as "RRC re-establishment"). Here, when the NCR-MT 520A enters the RRC idle state because a suitable cell cannot be found in the cell selection, the NCR apparatus 500A turns off the NCR-Fwd 510A. The NCR-Fwd 510A is off during an RRC connection re-establishment procedure.

The NCR control signal may include frequency control information for designating a center frequency of a radio signal (for example, a component carrier) that is a relay target in the NCR-Fwd 510A. When the NCR control signal received from the gNB 200 includes the frequency control information, the NCR-MT 520A (controller 523) controls the NCR-Fwd 510A such that the NCR-Fwd 510A relays a radio signal whose center frequency is indicated by the frequency control information as a target (step S2A). The NCR control signal may include a plurality of pieces of frequency control information for designating center frequencies different from each other. Since the NCR control signal includes the frequency control information, the gNB 200 can designate the center frequency of the radio signal to be relayed by the NCR-Fwd 510A via the NCR-MT 520A.

The NCR control signal may include mode control information for designating an operation mode of the NCR-Fwd 510A. The mode control information may be associated with the frequency control information (center frequency). The operation mode may be any one of a mode in which the NCR-Fwd 510A performs non-directional transmission and/or reception, a mode in which the NCR-Fwd 510A performs fixed-directional transmission and/or reception, a mode in which the NCR-Fwd 510A performs transmission and/or reception with a variable directional beam, and a mode in which the NCR-Fwd 510A performs Multiple Input Multiple Output (MIMO) relay transmission. The operation mode may be either a beamforming mode (that is, a mode in which improvement of a desired wave is emphasized) and a null steering mode (that is, a mode in which curbing of an interference wave is emphasized). When the NCR control signal received from the gNB 200 includes the mode control information, the NCR-MT 520A (controller 523) controls the NCR-Fwd 510A such that the NCR-Fwd 510A operates in the operation mode indicated by the mode control information (step S2A). Since the NCR control signal includes the mode control information, the gNB 200 can designate the operation mode of the NCR-Fwd 510A via the NCR-MT 520A.

Here, a mode in which the NCR apparatus 500A performs omnidirectional transmission and/or reception is a mode in which the NCR-Fwd 510A performs relaying in all directions, and may be referred to as an omni mode. The mode in which the NCR-Fwd 510A performs fixed-directional transmission and/or reception may be a directivity mode realized by one directional antenna. The mode may be a beamforming mode realized by applying fixed phase and amplitude control (antenna weight control) to a plurality of antennas. Any of these modes may be designated (set) from the gNB 200 to the NCR-MT 520A. The mode in which the NCR-Fwd 510A performs transmission and/or reception with a variable directional beam may be a mode for performing analog beamforming. The mode may be a mode in which digital beamforming is performed. The mode may be a mode in which hybrid beamforming is performed. The mode may be a mode for forming an adaptive beam specific to the UE 100. Any of these modes may be designated (set) from the gNB 200 to the NCR-MT 520A. In the operation mode in which beamforming is performed, beam control information to be described below may be provided from the gNB 200 to the NCR-MT 520A. The mode in which the NCR apparatus 500A performs MIMO relay transmission may be a mode for performing single-user (SU) spatial multiplexing. The mode may be a mode for performing Multi-User (MU) spatial multiplexing. The mode may be a mode for performing transmission diversity. Any of these modes may be designated (set) from the gNB 200 to the NCR-MT 520A. The operation mode may include a mode in which relay transmission by the NCR-Fwd 510A is turned on (activated) and a mode in which the relay transmission by the NCR-Fwd 510A is turned off (deactivated). Any of these modes may be designated (set) from the gNB 200 to the NCR-MT 520A in the NCR control signal.

The NCR control signal may include beam control information for designating a transmission direction, a transmission weight, or a beam pattern when the NCR-Fwd 510A performs directional transmission. The beam control information may be associated with the frequency control information (center frequency). The beam control information may include a precoding matrix indicator (PMI). The beam control information may include beamforming angle information. When the NCR control signal received from the gNB 200 includes beam control information, the NCR-MT 520A (controller 523) controls the NCR-Fwd 510A to form a transmission directivity (beam) indicated by the beam control information. When the NCR control signal includes the beam control information, the gNB 200 can control the transmission directivity of the NCR apparatus 500A via the NCR-MT 520A.

The NCR control signal may include output control information for designating a degree to which the NCR-Fwd 510A amplifies the radio signal (amplification gain) or the transmission power. The output control information may be information indicating a difference value (that is, a relative value) between a current amplification gain or transmission power and a target amplification gain or transmission power. When the NCR control signal received from the gNB 200 includes output control information, the NCR-MT 520A (controller 523) controls the NCR-Fwd 510A so that the NCR-Fwd 510A performs change to the amplification gain or transmission power indicated by the output control information. The output control information may be associated with frequency control information (center frequency). The output control information may be information for designating any one of an amplification gain, a beamforming gain, and an antenna gain of the NCR-Fwd 510A. The output control information may be information for designating transmission power of the NCR-Fwd 510A.

When one NCR-MT 520A controls the plurality of NCR-Fwds 510A, the gNB 200 (transmitter 210) may transmit an NCR control signal to the NCR-MT 520A for each NCR-Fwd 510A. In this case, the NCR control signal may include an identifier of the corresponding NCR-Fwd 510A (NCR identifier). The NCR-MT 520A (controller 523) controlling the plurality of NCR-Fwds 510A determines the NCR-Fwd 510A to which the NCR control signal is applied, based on the NCR identifier included in the NCR control signal received from the gNB 200. The NCR identifier may be transmitted together with the NCR control signal from the NCR-MT 520A to the gNB 200 even when the NCR-MT 520A controls only one NCR-Fwd 510A.

Thus, the NCR-MT 520A (controller 523) controls the NCR-Fwd 510A based on the NCR control signal from the gNB 200. This enables the gNB 200 to control the NCR-Fwd 510A via the NCR-MT 520A.

### (1.3) Example of Configuration of Each Apparatus

An example of a configuration of each apparatus in the mobile communication system 1 according to the embodiment will be described.

### (1.3.1) Example of Configuration of Relay Apparatus

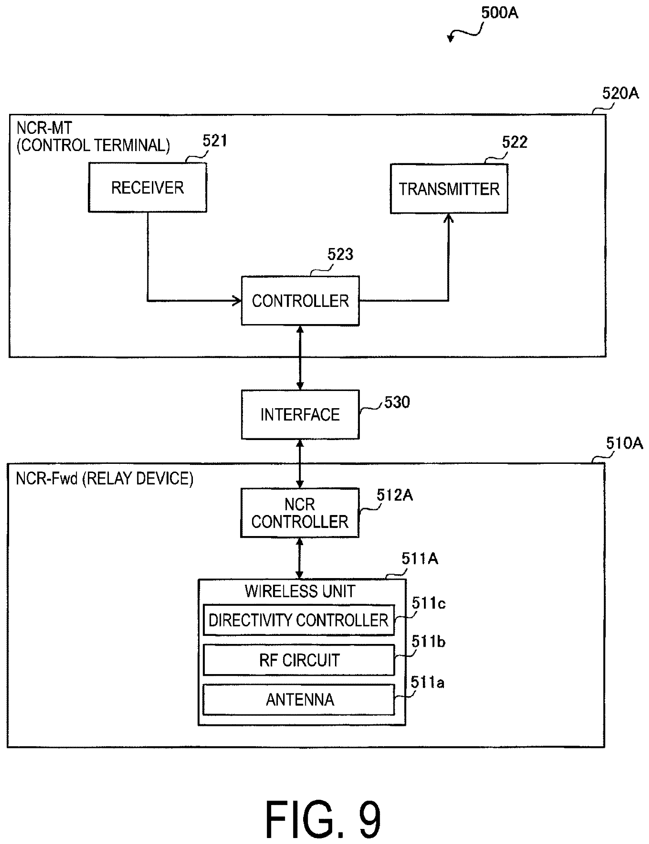

FIG. 9 is a diagram illustrating an example of a configuration of the NCR apparatus 500A (relay apparatus) according to the embodiment. The NCR apparatus 500A includes an NCR-Fwd 510A, an NCR-MT 520A, and an interface 530.

The NCR-Fwd 510A includes a wireless unit 511A and an NCR controller 512A. The wireless unit 511A includes an antenna 511a including a plurality of antennas (a plurality of antenna elements), an RF circuit 511b including an amplifier, and a directivity controller 511c that controls directivity of the antenna 511a. The RF circuit 511b amplifies and relays (transmits) radio signals transmitted and received by the antenna 511a. The RF circuit 511b may convert a radio signal, which is an analog signal, into a digital signal, and reconvert the digital signal into an analog signal after digital signal processing. The directivity controller 511c may perform analog beamforming through analog signal processing. The directivity controller 511c may perform digital beamforming through digital signal processing. The directivity controller 511c may perform analog and digital hybrid beamforming. The NCR controller 512A controls the wireless unit 511A in response to a control signal from the NCR-MT 520A. The NCR controller 512A may include at least one processor.

The NCR-MT 520A includes a receiver 521, a transmitter 522, and a controller 523. The receiver 521 performs various types of reception under control of the controller 523. The receiver 521 includes an antenna and a reception device. The reception device converts a radio signal received by the antenna (radio signal) into a baseband signal (a reception signal) and outputs the reception signal to the controller 523. The transmitter 522 performs various types of transmission under control of the controller 523. The transmitter 522 includes an antenna and a transmission device. The transmission device converts a baseband signal (a transmission signal) output by the controller 523 into a radio signal and transmits the radio signal from the antenna. The controller 523 performs various types of controls in the NCR-MT 520A. The operation of the NCR-MT 520A (and the NCR apparatus 500A) described above and to be described below may be an operation controlled by the controller 523. The controller 523 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing. The controller 523 executes a function of at least one layer selected from the group consisting of the PHY, the MAC, the RRC, and the F1-AP.

The interface 530 electrically or logically connects the NCR-Fwd 510A and the NCR-MT 520A. The controller 523 of the NCR-MT 520A controls the NCR-Fwd 510A via the interface 530. The interface 530 may be a logical entity of an upper layer (for example, an application layer).

In an embodiment, the receiver 521 of the NCR-MT 520A receives signaling (NCR control signal) used to control the NCR apparatus 500A from the gNB 200 through wireless communication. The controller 523 of the NCR-MT 520A controls the NCR apparatus 500A based on the signaling. This enables the gNB 200 to control the NCR-Fwd 510A via the NCR-MT 520A.

### (1.3.2) Example of Configuration of User Equipment

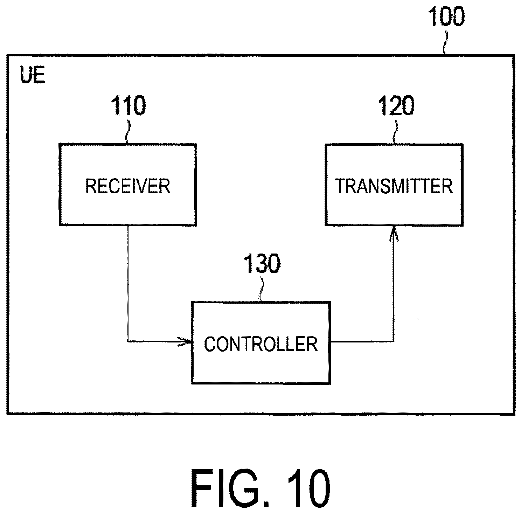

FIG. 10 is a diagram illustrating a configuration of the UE 100 (user equipment) according to an embodiment. The UE 100 includes a receiver 110, a transmitter 120, and a controller 130. The receiver 110 and the transmitter 120 constitute a wireless communicator that performs wireless communication with the gNB 200.

The receiver 110 performs various receptions under the control of the controller 130. The receiver 110 includes an antenna and a reception device. The reception device converts a radio signal received through the antenna into a baseband signal (a reception signal) and outputs the resulting signal to the controller 130.

The transmitter 120 performs various transmissions under the control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various controls and processes in the UE 100. Such processing includes processing of respective layers to be described later. The operations of the UE 100 described above and to be described below may also be an operation under the control of the controller 130. The controller 130 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

### (1.3.3) Example of Configuration of Base Station

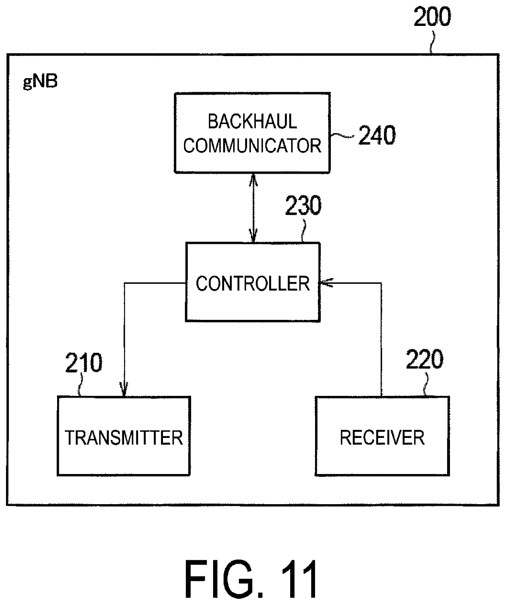

FIG. 11 is a diagram illustrating an example of a configuration of the gNB 200 (base station) according to an embodiment. The gNB 200 includes a transmitter 210, a receiver 220, a controller 230, and a backhaul communicator 240.

The transmitter 210 performs various transmissions under the control of the controller 230. The transmitter 210 includes an antenna and a transmission device. The transmission device converts a baseband signal (a transmission signal) output by the controller 230 into a radio signal and transmits the resulting signal through the antenna. The receiver 220 performs various types of reception under control of the controller 230. The receiver 220 includes an antenna and a reception device. The reception device converts a radio signal received through the antenna into a baseband signal (a reception signal) and outputs the resulting signal to the controller 230. The transmitter 210 and the receiver 220 may be capable of beamforming using a plurality of antennas.

The controller 230 performs various types of control for the gNB 200. The operation of the gNB 200 described above and to be described below may be an operation under the control of the controller 230. The controller 230 includes at least one processor and at least one memory. The memory stores a program to be executed by the processor and information to be used for processing in the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighbor base station via the inter-base station interface. The backhaul communicator 240 is connected to the AMF/UPF 300 via the interface between a base station and the core network. The gNB may include a Central Unit (CU) and a Distributed Unit (DU) (that is, functions are divided), and both units may be connected via an F1 interface.

In the embodiment, the transmitter 210 of the gNB 200 transmits signaling (NCR control signal) used for control of the NCR-Fwd 510A to the NCR-MT 520A through wireless communication. This enables the gNB 200 to control the NCR apparatus 500A via the NCR-MT 520A.

### (1.4) Overview of Cell Reselection

The NCR-MT 520A supports cell reselection in the RRC idle state or the RRC inactive state.

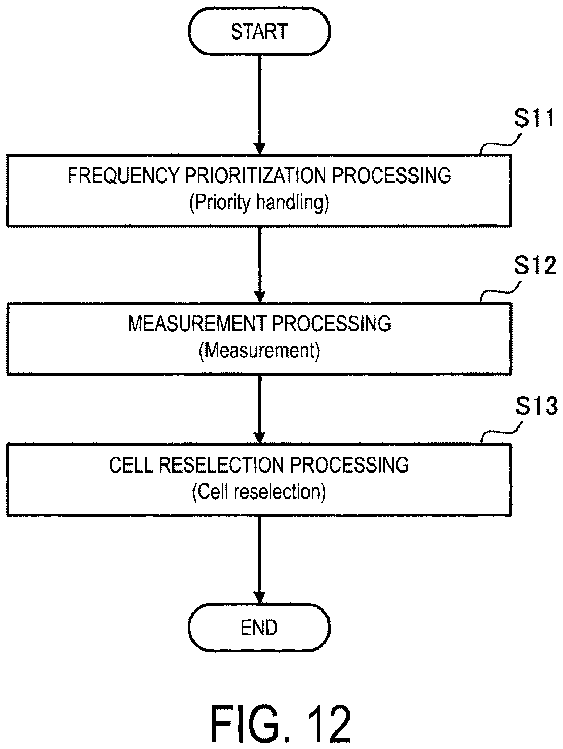

FIG. 12 is a diagram illustrating a general cell reselection procedure. The NCR-MT 520A in the RRC idle state or RRC inactive state performs the cell reselection procedure to transition from a current serving cell to a neighbor cell. Specifically, the NCR-MT 520A identifies a neighbor cell on which the NCR-MT 520A is to camp through the cell reselection procedure, and reselects the identified neighbor cell. When the frequency (carrier frequency) is the same between the current serving cell and the neighbor cell, this is called as an intra-frequency, and when the frequency (carrier frequency) is different between the current serving cell and the neighbor cell, this is called an inter-frequency. The current serving cell and the neighbor cell may be managed by the same gNB 200 or may be managed by the gNBs 200 different from each other.

In step S11, the NCR-MT 520A performs frequency prioritization processing based on a priority for each frequency (also referred to as "absolute priority", "cell reselection priority", or "dedicated priority") designated from the gNB 200, for example, by a system information block (SIB) or an RRC release message. Specifically, the NCR-MT 520A manages the frequency priority designated from the gNB 200 for each frequency.

In step S12, the NCR-MT 520A performs measurement processing of measuring the radio quality for each of the serving cell and the neighbor cell. The NCR-MT 520A measures the reception power and reception quality of a reference signal transmitted by the serving cell and the neighbor cell, specifically, a Cell Defining-Synchronization Signal and PBCH block (CD-SSB). For example, the NCR-MT 520A always measures the radio quality for frequencies having a higher priority than that of the current serving cell, and measures the radio quality of the frequency having the same or lower priority than that of the current serving cell when the radio quality of the current serving cell falls below a predetermined quality for frequencies having the same or lower priority than that of the current serving cell.

In step S13, the NCR-MT 520A performs cell reselection processing of reselecting a cell on which the NCR-MT 520A will camp based on a measurement result in step S12. For example, when the frequency priority of the neighbor cell is higher than that of the current serving cell, and the neighbor cell satisfies a predetermined quality criterion (that is, a minimum required quality criterion) for a predetermined period of time, the NCR-MT 520A may perform cell reselection to the neighbor cell. When the frequency priority of the neighbor cell is the same as that of the current serving cell, the NCR-MT 520A may rank the radio quality of the neighbor cell and perform on cell reselection to the neighbor cell having a higher rank than the current serving cell for a predetermined period of time. When the frequency priority of the neighbor cell is lower than that of the current serving cell, and a state in which the radio quality of the current serving cell is lower than a certain threshold and the radio quality of the neighbor cell is higher than another threshold continues for a predetermined period of time, the NCR-MT 520A may perform cell reselection to the neighbor cell.

### (1.5) Operation According to First Embodiment

The first embodiment is an embodiment related to cell reselection of the NCR apparatus 500A (the NCR-MT 520A) in the RRC inactive state or the RRC idle state.

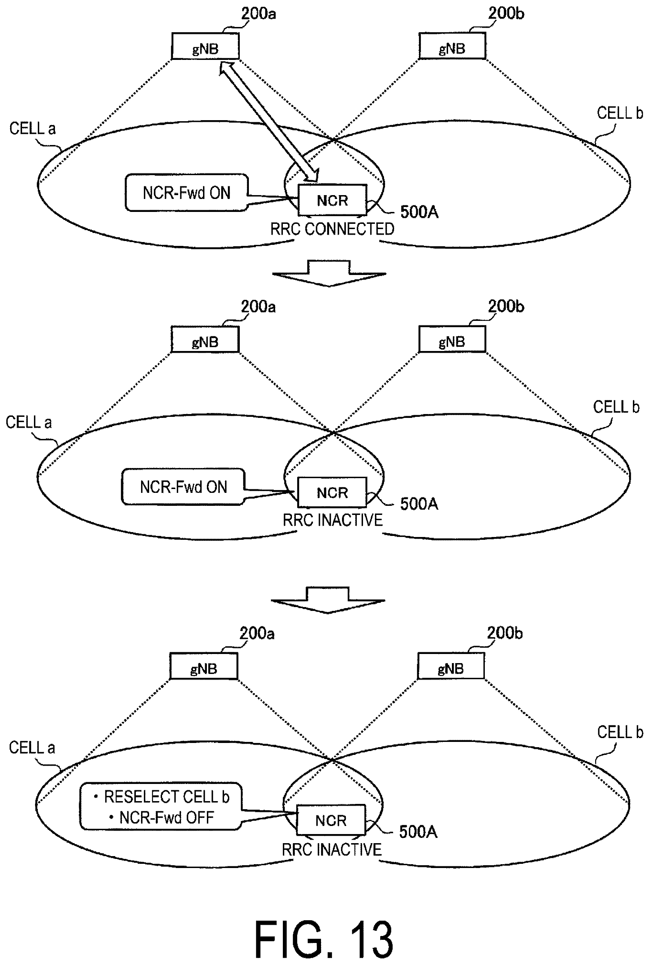

FIG. 13 is a diagram illustrating an operation according to the first embodiment. In the illustrated example, the NCR apparatus 500A (the NCR-MT 520A) is first in the RRC connected state in the cell a managed by the gNB 200a. A cell b adjacent to the cell a is managed by the gNB 200b, which is different from the gNB 200a. However, the cell a and the cell b may be managed by the same gNB 200. It is assumed that the NCR apparatus 500A (NCR-MT 520A) is performing a relay operation in accordance with an NCR control signal received from the cell a (gNB 200a) (that is, NCR-Fwd 510A is on).

Second, the NCR-MT 520A receives the RRC release message including a suspend configuration from the cell a (the gNB 200) and transitions to the RRC inactive state. The NCR-MT 520A in the RRC inactive state maintains the NCR-Fwd 510A on in accordance with the latest NCR control signal (particularly, the NCR configuration information) received from the gNB 200. Such an operation may be applied not only to the RRC inactive state but also to the RRC idle state.

Third, after the NCR-MT 520A transitions to the RRC inactive state (or RRC idle state) in the cell a, the NCR-MT 520A is likely to reselect another cell b, for example, due to blocking frequency range (FR) 2. In this case, when the NCR-Fwd 510A is off, there is no problem, but when the NCR-Fwd 510A is on, there is concern that the latest NCR configuration information held by the NCR apparatus 500A is provided by the cell a and is not suitable for the cell b.

It is necessary to clarify how the NCR apparatus 500A operates in such a scenario. There are two possible options:
Option 1: The NCR-Fwd 510A continues to be on with the latest NCR configuration information.
Option 2: The NCR-Fwd 510A is turned off. The NCR apparatus 500A may discard the latest NCR configuration information.

Option 1 is preferable from the viewpoint of simplifying the operation of the NCR-MT 520A. However, it may be problematic for the NCR-Fwd 510A to operate in the other cell b in accordance with the latest NCR configuration information provided by the cell a (that is, the last serving cell). For example, the reselected cell b is likely to have a different set of resources available to the NCR apparatus 500A. Therefore, from the viewpoint of technical rationality, option 2 is more preferable.

In the first embodiment, when the NCR-MT 520A is in the RRC idle state or the RRC inactive state in the first cell (for example, the cell a) and the NCR-Fwd 510A is on, the NCR-MT 520A performs cell reselection to the second cell (for example, the cell b) different from the first cell. The NCR apparatus 500A (the NCR-MT 520A) turns off the NCR-Fwd 510A based on the cell reselection from the first cell to the second cell. That is, when the NCR-MT 520A reselects a different cell, the NCR apparatus 500A controls the NCR-Fwd 510A so that the NCR-Fwd 510A is turned off.

When the NCR-MT 520A is in the RRC idle state or the RRC inactive state in the first cell, the NCR apparatus 500A (the NCR-MT 520A) may hold the NCR control signal (the latest NCR control signal) received from the first cell. The NCR-MT 520A may discard the latest NCR control signal (also referred to as the "NCR-Fwd context") held by the NCR-MT 520A, in response to the cell reselection from the first cell to the second cell.

After the cell reselection from the first cell to the second cell, the NCR-MT 520A may transition to the RRC connected state in the second cell to acquire the NCR control signal from the second cell. For example, the NCR-MT 520A in the RRC idle state in the second cell transitions to the RRC connected state through an RRC connection establishment procedure. The NCR-MT 520A in the RRC inactive state in the second cell transitions to the RRC connected state through an RRC connection recovery procedure. The NCR-MT 520A that transitions to the RRC connected state in the second cell receives a new NCR control signal related to the relay operation from the second cell. The NCR apparatus 500A controls the relay operation based on the NCR control signal received from the second cell. Hereinafter, the RRC connection establishment procedure and the RRC connection recovery procedure may be collectively referred to as an "RRC connection procedure."

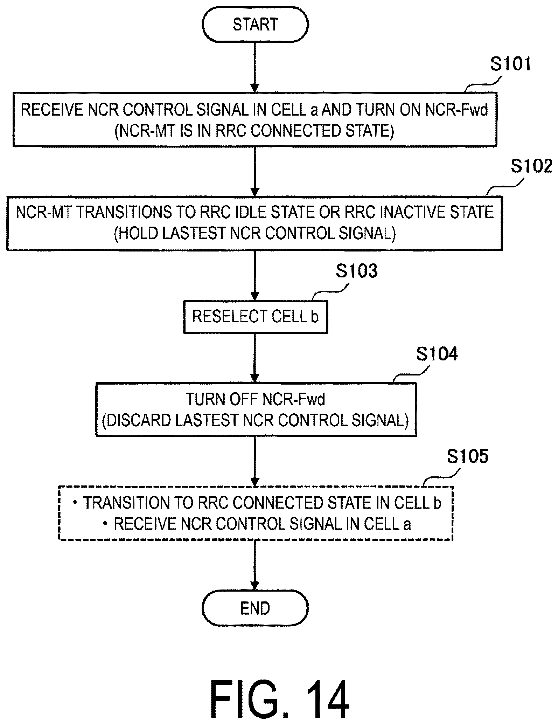

FIG. 14 is a diagram illustrating an example of the operation of the NCR apparatus 500A according to the first embodiment.

In step S101, the NCR-MT 520A in the RRC connected state in the cell a receives the NCR control signal including information indicating that the NCR-MT 520A is on (the NCR configuration information or the NCR control information) from the cell a (the gNB 200), and controls the NCR-Fwd 510A so that the NCR-Fwd 510A is turned on.

In step S102, the NCR-MT 520A transitions to the RRC idle state or the RRC inactive state. The NCR-MT 520A transitions to the RRC idle state or the RRC inactive state by receiving the RRC release message from the cell a (the gNB 200). The NCR-MT 520A holds the latest NCR control signal. For example, the NCR-MT 520A holds information indicating that the NCR-MT 520A is on (the NCR configuration information or the NCR control information). The NCR apparatus 500A maintains the NCR-Fwd 510A on in accordance with the latest NCR control signal.

In step S103, the NCR-MT 520A in the RRC idle state or the RRC inactive state in the cell a reselects the cell b according to the cell reselection. The cell b is a cell different from a current cell a and is a cell different from the cell a that has been most recently configured (and controlled). The cell b may be a cell different from a desired cell to which the NCR apparatus 500A is to be connected according to a station installation design (communication service area design).

In step S104, the NCR-MT 520A controls the NCR-Fwd 510A so that the NCR-Fwd 510A is turned off in response to the reselection of the cell b. The NCR-MT 520A may discard the latest NCR control signal held by the NCR-MT 520A.

In step S105, the NCR-MT 520A may start the RRC connection procedure (the RRC connection establishment procedure or the RRC connection recovery procedure) for the cell b to transition to the RRC connected state in response to the reselection of the cell b. The RRC connection establishment procedure includes transmission of an RRC establishment request message from the NCR-MT 520A to the cell b, and transmission of an RRC establishment message from the cell b to the NCR-MT 520A. The RRC connection recovery procedure includes transmission of an RRC recovery request message from the NCR-MT 520A to the cell b, and transmission of an RRC recovery message from the cell b to the NCR-MT 520A. Through completion of the RRC connection procedure, the NCR-MT 520A transitions to the RRC connected state.

The NCR-MT 520A may start the RRC connection procedure for the cell b only when at least one of first and second conditions below is satisfied.

First condition: The cell b is a desired cell. In other words, this condition is that, on the assumption that one or more cells to which the NCR-MT 520A is to connect are determined in the station installation design, the cell b corresponds to the predetermined cell.

Second condition: The cell b transmits SIB1 including information indicating that the NCR apparatus is supported (NCR Support IE).

The NCR-MT 520A, which has transitioned to the RRC connected state in the cell b, receives a new NCR control signal from the cell b and controls (for example, turns on) the NCR-Fwd 510A in accordance with the received NCR control signal.

### (1.6) First Variation of First Embodiment

A first variation of the first embodiment will be described, focusing mainly on differences from the first embodiment described above.

For example, when a geographical location of the NCR apparatus 500A does not change even when the NCR-MT 520A performs the cell reselection, it is assumed that there is no problem even when the NCR-Fwd 510A continues to operate with an original configuration. Therefore, the gNB 200 may be able to configure whether to perform an operation of turning off the NCR-Fwd 510A when the NCR apparatus 500A reselects the cell b. In the present variation, the gNB 200 managing the cell a configures in the NCR-MT 520A whether to turn off the NCR-Fwd 510A during cell reselection.

The NCR-MT 520A receives configuration information (also referred to as "on/off configuration information") for designating whether to turn off the NCR-Fwd 510A from the cell a (the gNB 200) during cell reselection. When the on/off configuration information indicates to turn off the NCR-Fwd 510A during cell reselection, the NCR apparatus 500A turns off the NCR-Fwd 510A in response to cell reselection to the cell b.

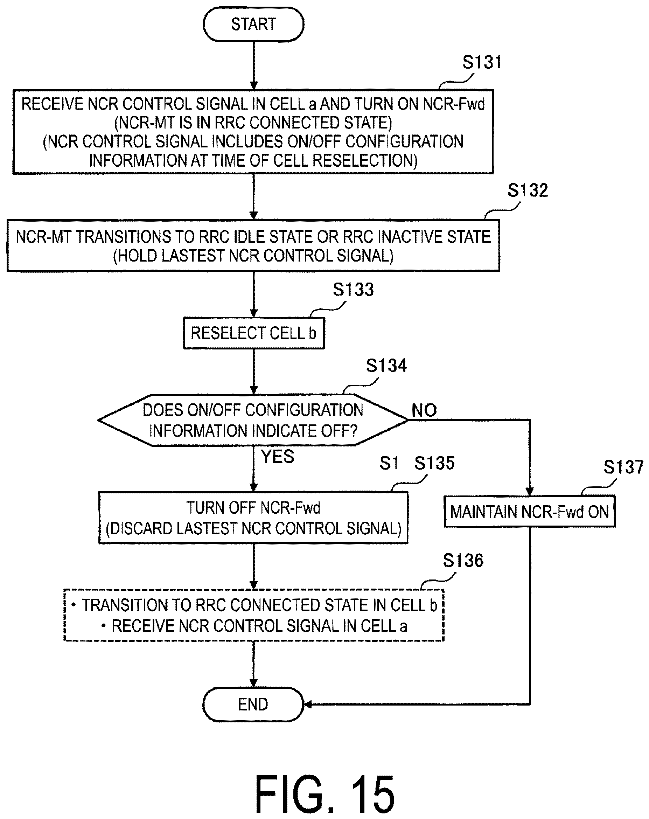

FIG. 15 is a diagram illustrating an example of the operation of the NCR apparatus 500A according to the first variation of the first embodiment. Here, differences from the first embodiment described above will be mainly described, and overlapping description will be omitted.

In step S131, the NCR-MT 520A in the RRC connected state in the cell a receives the NCR control signal from the cell a (the gNB 200) and controls the NCR-Fwd 510A so that the NCR-Fwd 510A is turned on in accordance with the NCR control signal. The NCR control signal may include on/off configuration information. Alternatively, the on/off configuration information may be broadcast in the SIB in the cell a. The NCR-MT 520A receives the on/off configuration information. The on/off configuration information may include a configuration as to whether the NCR-Fwd 510A may operate as an RF repeater of the related art (that is, an RF repeater that does not depend on network control) when the NCR-Fwd 510A is kept on. Further, when the NCR apparatus 500A has the plurality of NCR-Fwds 510A (that is, the NCR-MT 520A handles the plurality of NCR-Fwds 510A), the on/off configuration information may include information for configuring on/off of each of the plurality of NCR-Fwds 510A during the cell reselection.

In step S132, the NCR-MT 520A transitions to the RRC idle state or the RRC inactive state. It is assumed that the NCR-Fwd 510A is controlled to be turned on in accordance with the latest NCR control signal. The NCR-MT 520A holds the latest NCR control signal.

In step S133, the NCR-MT 520A that has transitioned to the RRC idle state or the RRC inactive state in the cell a reselects the cell b through the cell reselection.

In step S134, the NCR-MT 520A determines whether the on/off configuration information configured by the cell a (the gNB 200) indicates that the NCR-Fwd 510A is off. When the NCR apparatus 500A has the plurality of NCR-Fwds 510A, the NCR-Fwd 510A may perform the determination of step S134 on each of the plurality of NCR-Fwds 510A.

When the on/off configuration information indicates that the NCR-Fwd 510A is off (step S134: YES), the NCR-MT 520A controls the NCR-Fwd 510A so that the NCR-Fwd 510A is turned off in response to the reselection of the cell b in step S135. The NCR-MT 520A may discard the latest NCR control signal held by the NCR-MT 520A. The operation of step S136 is the same as that in the first embodiment described above.

When the on/off configuration information indicates that the NCR-Fwd 510A is on (step S134: NO), the NCR-MT 520A maintains the NCR-Fwd 510A on even when the cell b is reselected in step S137. The NCR apparatus 500A may operate the NCR-Fwd 510A as the RF repeater of the related art.

### (1.7) Second Variation of First Embodiment

A second variation of the first embodiment will be described, focusing mainly on differences from the first embodiment described above. The present variation may be implemented in combination with the first variation described above.

A valid area in which the same NCR control signal can be used in other cells may be configured from the network 5 (the gNB 200) to the NCR-MT 520A. The valid area is an area consisting of one or more cells. For example, the gNB 200 transmits the NCR control signal including NCR configuration information and/or the NCR control information related to the relay operation and area information indicating the valid area of the NCR configuration information and/or the NCR control information to the NCR-MT 520A. The area information may be a list of cell IDs or (a list of) IDs of frequencies.

The area information may be information for identifying the gNB 200, such as a gNB ID or a freely-selected ID for identifying the gNB (for example, a part of the gNB ID may be (shortened) used, or the ID may be a number form different from the gNB ID). The identification information may be broadcast in the SIB from the gNB 200, and the UE 100 may use the broadcast information to determine whether the cell in which RRC has been reestablished belongs to the valid area.

In the present variation, the NCR-MT 520A receives from the cell a (the gNB 200) the NCR control signal including information indicating that the NCR-Fwd 510A is turned on and area information indicating the valid area of the information. When the cell b does not belong to the valid area, the NCR apparatus 500A turns off the NCR-Fwd 510A in response to cell reselection to the cell b. On the other hand, when the cell b belongs to the valid area, the NCR apparatus 500A maintains the NCR-Fwd 510A on even when cell reselection to the cell b is performed.

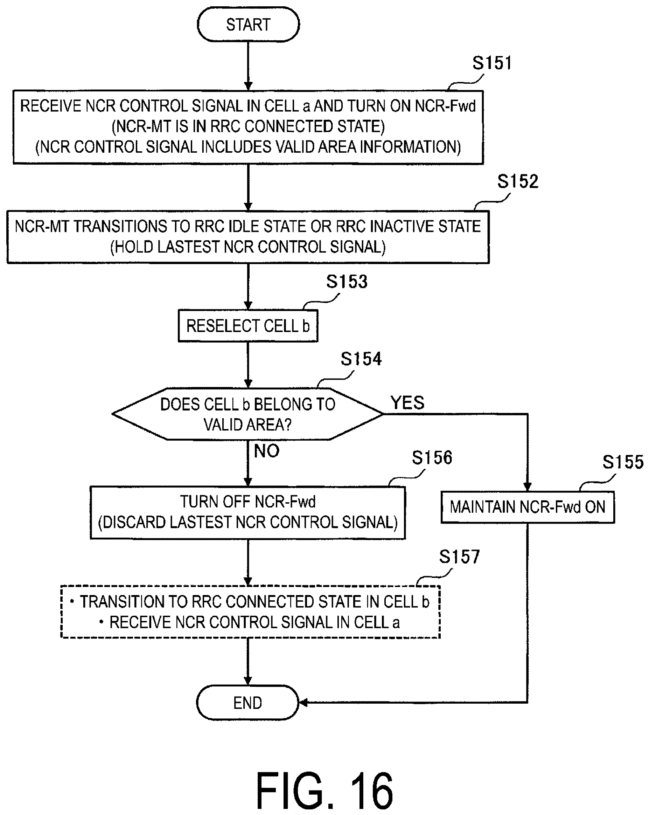

FIG. 16 is a diagram illustrating an example of the operation of the NCR apparatus 500A according to the second variation of the first embodiment. Here, differences from the first embodiment described above will be mainly described, and overlapping description will be omitted.

In step S151, the NCR-MT 520A in the RRC connected state in the cell a receives the NCR control signal from the cell a (the gNB 200) and controls the NCR-Fwd 510A so that the NCR-Fwd 510A is turned on in accordance with the NCR control signal. The NCR control signal includes the area information indicating the valid area. The valid area may be configured commonly for the NCR configuration information and the NCR control information. The valid area may be configured separately for the NCR configuration information and the NCR control information.

In step S152, the NCR-MT 520A transitions to the RRC idle state or the RRC inactive state. It is assumed that the NCR-Fwd 510A is controlled to be turned on in accordance with the latest NCR control signal. The NCR-MT 520A holds the latest NCR control signal.

In step S153, the NCR-MT 520A that has transitioned to the RRC idle state or the RRC inactive state in the cell a reselects the cell b through the cell reselection. The NCR-MT 520A may notify an upper layer that the cell b has been reselected.

In step S154, the NCR-MT 520A determines whether the cell b belongs to the valid area based on the area information configured by the cell a (the gNB 200).

When it is determined that the cell b belongs to the valid area (step S154: YES), the NCR apparatus 500A (the NCR-MT 520A) controls the NCR-Fwd 510A so that the NCR-Fwd 510A is turned on in accordance with the latest NCR control signal in step S155.

On the other hand, when it is determined that the cell b does not belong to the valid area (step S154: NO), the NCR apparatus 500A (the NCR-MT 520A) turns off the NCR-Fwd 510A in step S156. The NCR-MT 520A may discard the NCR control signal held by the NCR-MT 520A. The NCR-MT 520A may notify the upper layer that the cell b does not belong to the valid area (that the cell b which does not belong to the valid area has been reselected). The operation of step S157 is the same as that of the first embodiment described above.

### (1.8) Third Variation of First Embodiment

A third variation of the first embodiment will be described, focusing mainly on differences from the first embodiment described above. The third variation may be implemented in combination with the above variations.

The above-described valid area may be determined through negotiation between the gNBs 200. For example, the gNB 200 transmits the NCR control signal (NCR configuration information) to be set to the NCR apparatus 500A of its own cell to an adjacent gNB. When the adjacent gNB determines that the NCR control signal is applicable to its own cell, the adjacent gNB may permit its own cell as a valid area of the NCR control signal.

For example, the gNB 200b managing the cell b acquires the NCR configuration information that the gNB 200a configures in the NCR apparatus 500A from the gNB 200a managing the cell a. The gNB 200b may transmit to the gNB 200a a notification indicating the result of determining whether the NCR configuration information is valid in the cell b based on the acquired the NCR configuration information. When the NCR configuration information acquired from the gNB 200a is also valid in the cell b, the gNB 200b may omit configuration of the NCR configuration information for the NCR-MT 520A from the gNB 200b.

For example, when the cell b relays the same resources as the cell a, or when the NCR apparatus 500A in the cell b relays a radio signal of the cell a, it may be determined that the NCR configuration information acquired from the gNB 200a is valid in the cell b.

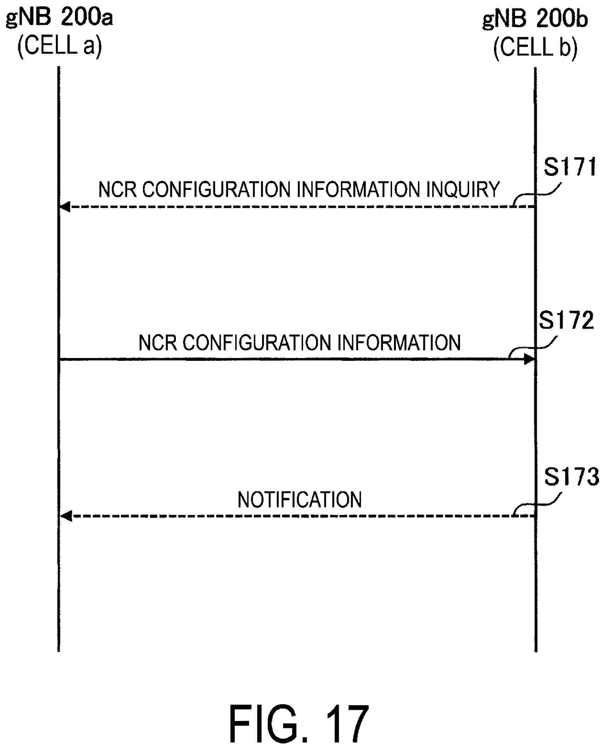

FIG. 17 is a diagram illustrating an example of the operation of a mobile communication system 1 according to the third variation of the first embodiment. Here, differences from the first embodiment described above will be mainly described, and overlapping description will be omitted. It is assumed that communication between the gNB 200a and the gNB 200b is performed, for example, on an Xn interface. It is also assumed that the NCR-MT 520A is connected to the cell a and controls the NCR-Fwd 510A in accordance with the NCR control signal from the cell a.

In step S171, the gNB 200b may inquire of the gNB 200a about the NCR configuration information of the NCR apparatus 500A in the cell a. At this point in time, the NCR apparatus 500A may not have yet moved to the cell b.

In step S172, the gNB 200a transmits an Xn message (for example, a gNB configuration update message) including the NCR configuration information to the gNB 200b. The NCR configuration information may be notified as a combination (for example, in a list format) of an identifier of the NCR apparatus 500A and the NCR configuration information.

In step S173, the gNB 200b may determine whether the NCR configuration information can be used in its own cell (the cell b) based on the NCR configuration information from the gNB 200a, and notify the gNB 200a of a determination result. Here, the description will be given assuming that the NCR configuration information can be used in the cell b.

The gNB 200a may configure an area in which the current NCR configuration information can continue to be applied to the NCR-MT 520A (see the second variation). Based on this configuration, the NCR apparatus 500A controls the NCR-Fwd 510A in accordance with the current NCR configuration information even after reselecting the cell b.

Alternatively, a scenario in which the NCR apparatus 500A is handed over from the cell a to the cell b may be assumed. When the gNB 200a determines the handover, the gNB 200a may not include the NCR configuration information in a handover request message that is transmitted to the gNB 200b if the gNB 200b has been notified of the NCR configuration information or if it is confirmed that the NCR configuration information can be used. Further, when the gNB 200a determines a target cell for handover, the gNB 200a may preferentially determine another cell that can use the NCR configuration information as the target cell.

### (2) Second Embodiment

A second embodiment will be described mainly with respect to the differences from the first embodiment. The first embodiment and its variations may be implemented in combination with the second embodiment.

An assumed basic scenario of the second embodiment is the same as that of the first embodiment. However, in the second embodiment, the NCR-Fwd 510A is turned off with the start of the RRC connection procedure as a trigger instead of the NCR-Fwd 510A being turned off with the cell reselection as a trigger as in the first embodiment.

That is, in the second embodiment, when the NCR-MT 520A is in the RRC idle state or the RRC inactive state in the first cell and the NCR-Fwd 510A is on, the NCR-MT 520A starts, for the second cell, the RRC connection procedure (the RRC connection establishment procedure or the RRC connection recovery procedure) for transition to the RRC connected state. The NCR apparatus 500A turns off the NCR-Fwd 510A based on the start of the RRC connection procedure. In the second embodiment, the second cell is a target cell for the RRC connection establishment or RRC connection recovery.

However, in the second embodiment, when the second cell is the same cell as the first cell, the NCR apparatus 500A may start the RRC connection procedure or maintain the NCR-Fwd 510A on.

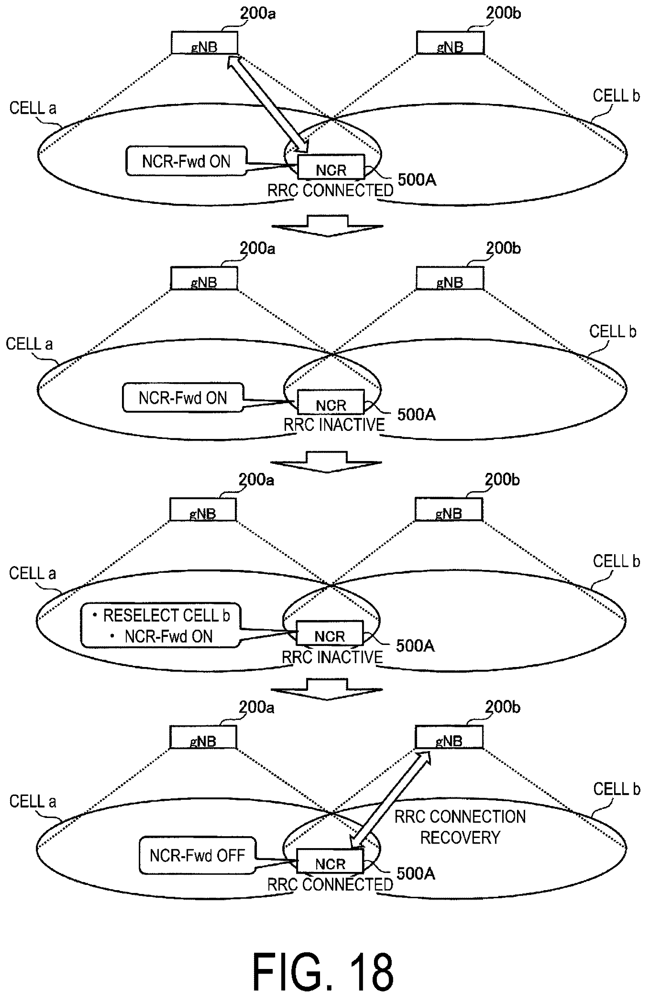

FIG. 18 is a diagram illustrating an example of the operation according to the second embodiment. Hereinafter, an operation when the NCR-MT 520A is in the RRC inactive state rather than the RRC idle state will be mainly described. However, in the following description, the RRC inactive state may be read as the RRC idle state, and the RRC connection recovery may be read as the RRC connection establishment.

First, the NCR apparatus 500A (the NCR-MT 520A) is in the RRC connected state in the cell a managed by the gNB 200a. A cell b adjacent to the cell a is managed by the gNB 200b, which is different from the gNB 200a. However, the cell a and the cell b may be managed by the same gNB 200. It is assumed that the NCR apparatus 500A (NCR-MT 520A) is performing a relay operation in accordance with an NCR control signal received from the cell a (gNB 200a) (that is, NCR-Fwd 510A is on).

Second, the NCR-MT 520A receives the RRC release message including the suspend configuration from the cell a (the gNB 200) and transitions to the RRC inactive state. The NCR-MT 520A in the RRC inactive state maintains the NCR-Fwd 510A on in accordance with the latest NCR control signal (particularly, the NCR configuration information) received from the gNB 200.

Third, after the NCR-MT 520A transitions to the RRC inactive state in the cell a, the NCR-MT 520A reselects another cell b, for example, due to blocking FR2. In the second embodiment, the NCR apparatus 500A does not turn off the NCR-Fwd 510A, but maintains the NCR-Fwd 510A on at a point in time of the cell reselection. However, the NCR apparatus 500A may operate the NCR-Fwd 510A as the RF repeater of the related art.

Fourth, the NCR-MT 520A reselecting the cell b in the RRC inactive state starts the RRC connection recovery procedure with the cell b. The NCR apparatus 500A turns off the NCR-Fwd 510A based on the start of the RRC connection recovery procedure. The NCR-MT 520A that has transitioned to the RRC connected state in the cell b receives a new NCR control signal from the cell b and controls (for example, turns on) the NCR-Fwd 510A in accordance with the received new NCR control signal.

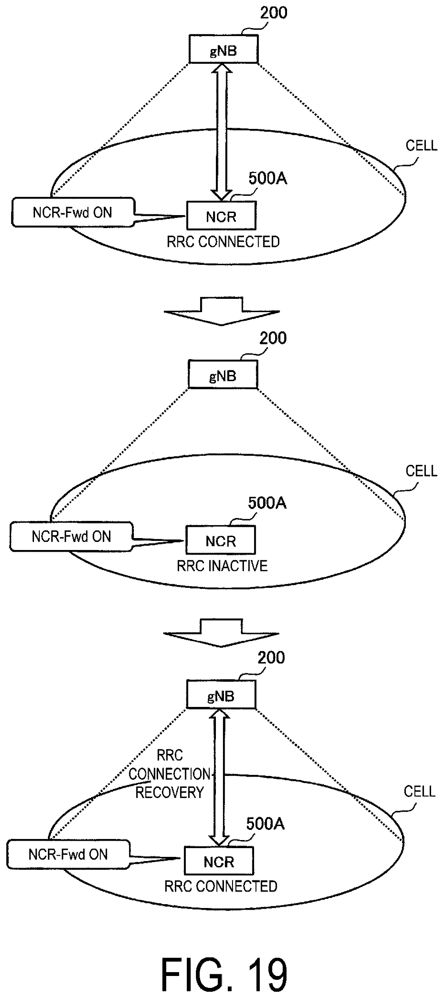

FIG. 19 is a diagram illustrating another example of the operation according to the second embodiment. In the illustrated example, it is assumed that the NCR-MT 520A performs RRC connection recovery with the original cell a without performing the cell reselection.

First, the NCR apparatus 500A (the NCR-MT 520A) is in the RRC connected state in the cell a managed by the gNB 200a. It is assumed that the NCR apparatus 500A (NCR-MT 520A) is performing a relay operation in accordance with an NCR control signal received from the cell a (gNB 200a) (that is, NCR-Fwd 510A is on).

Second, the NCR-MT 520A receives the RRC release message including the suspend configuration from the cell a (the gNB 200) and transitions to the RRC inactive state. When the NCR-MT 520A is in the RRC inactive state, the NCR apparatus 500A maintains the NCR-Fwd 510A on in accordance with the latest NCR control signal (particularly, the NCR configuration information) received from the gNB 200.

Third, the NCR-MT 520A in the RRC inactive state starts the RRC connection recovery procedure with the cell a. In this case, the NCR apparatus 500A maintains the NCR-Fwd 510A on even when the RRC connection recovery procedure starts.

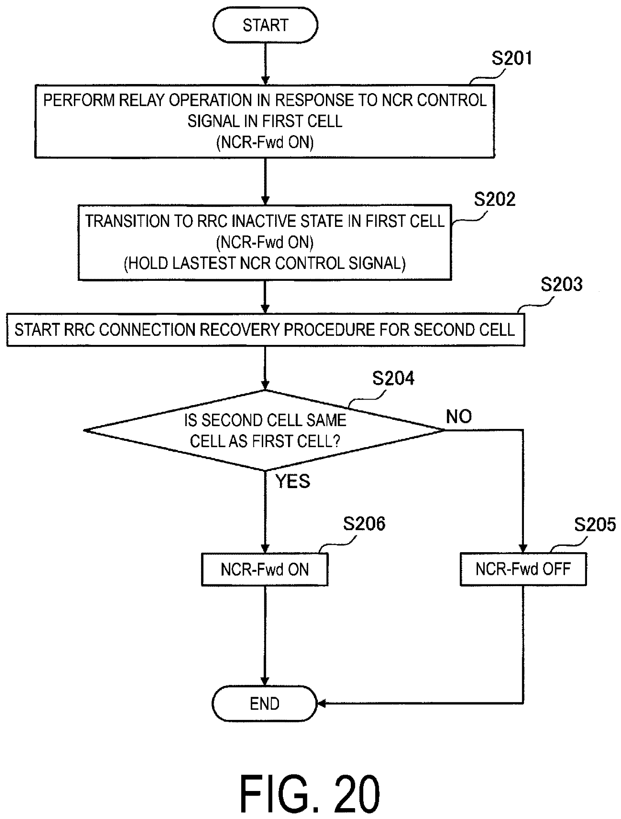

FIG. 20 is a diagram illustrating an example of the operation of the NCR apparatus 500A according to the second embodiment. Here, differences from the first embodiment described above will be mainly described, and overlapping description will be omitted.

In step S201, the NCR-MT 520A in the RRC connected state in the first cell receives the NCR control signal including information indicating that the NCR-MT 520A is on (the NCR configuration information or the NCR control information) from the first cell (the gNB 200), and controls the NCR-Fwd 510A so that the NCR-Fwd 510A is turned on.

In step S202, the NCR-MT 520A transitions to the RRC inactive state. The NCR-MT 520A holds the latest NCR control signal. For example, the NCR-MT 520A holds information indicating that the NCR-MT 520A is on (the NCR configuration information or the NCR control information). The NCR apparatus 500A maintains the NCR-Fwd 510A on in accordance with the latest NCR control signal.

The NCR-MT 520A in the RRC idle state or the RRC inactive state in the first cell may reselect a cell different from the first cell as the second cell. Alternatively, the NCR-MT 520A may maintain the same cell as the first cell as the second cell without performing the cell reselection.

In step S203, the NCR-MT 520A starts the RRC connection recovery procedure for the second cell. For example, the NCR-MT 520A transmits an RRC recovery request procedure to the second cell.

The NCR-MT 520A may start the RRC connection procedure for the second cell only when at least one of first and second conditions below is satisfied.

First condition: The second cell is a desired cell. In other words, this condition is that, on the assumption that one or more cells to which the NCR-MT 520A are to connect are determined in the station installation design, the second cell corresponds to the predetermined cell.

Second condition: The second cell transmits SIB1 including information indicating that the NCR apparatus is supported (NCR Support IE).

In step S204, the NCR-MT 520A determines whether the second cell is the same cell as the first cell. A case in which the second cell is a cell different from the first cell corresponds to a case in FIG. 19. On the other hand, a case in which the second cell is the same cell as the first cell corresponds to a case in FIG. 20.

When it is determined that the second cell is a cell different from the first cell (step S204: NO), the NCR apparatus 500A (the NCR-MT 520A) controls the NCR-Fwd 510A so that the NCR-Fwd 510A is turned off in response to the start of the RRC connection recovery procedure in step S205. The NCR-MT 520A may discard the latest NCR control signal held by the NCR-MT 520A. In this case, after the NCR-MT 520A transitions to the RRC connected state in the second cell, the NCR-MT 520A may receive a new NCR control signal from the second cell and control (for example, turn on) the NCR-Fwd 510A in accordance with the received NCR control signal.

On the other hand, when it is determined that the second cell is the same as the first cell (step S204: YES), the NCR apparatus 500A (the NCR-MT 520A) maintains the NCR-Fwd 510A on in accordance with the latest NCR control signal held by the NCR apparatus 500A, even when the RRC connection recovery procedure starts in step S206.

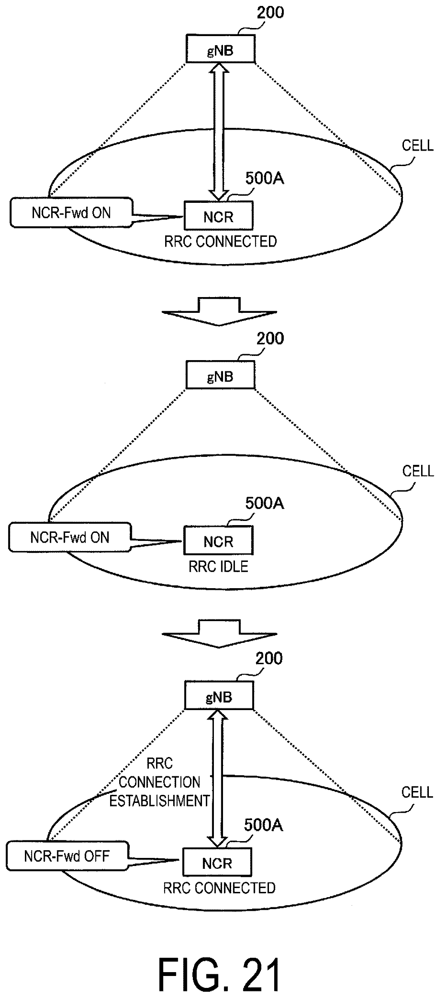

In the present operation example, the operation when the NCR-MT 520A transitions from the RRC inactive state to the RRC connected state has been described, but the operation when the NCR-MT 520A transitions from the RRC idle state to the RRC connected state may be the same as the operation in FIG. 20. Alternatively, the operation when the NCR-MT 520A transitions from the RRC idle state to the RRC connected state may be partially different from the operation in FIG. 20. When the NCR-MT 520A is in the RRC idle state, the gNB 200 is likely not to have the context of the NCR apparatus 500A, and there is concern that it is not desirable to continue the on control. Therefore, as illustrated in FIG. 21, when the NCR-MT 520A transitions from the RRC idle state to the RRC connected state, the NCR apparatus 500A may turn off the NCR-Fwd 510A uniformly regardless of whether the cell is the same, when the RRC connection establishment procedure starts.

Further, in the second embodiment, each of the variations of the first embodiment described above can be applied.

For example, the NCR control signal may include the on/off configuration information indicating whether the NCR-Fwd 510A is to be turned off during the RRC connection recovery, similar to the first variation of the first embodiment. Alternatively, the on/off configuration information may be broadcast in the SIB in the cell a. The NCR-MT 520A receives the on/off configuration information. The on/off configuration information may include a configuration as to whether the NCR-Fwd 510A may operate as the RF repeater of the related art (that is, an RF repeater that does not depend on network control) when the NCR-Fwd 510A is kept on. When the NCR apparatus 500A includes the plurality of NCR-Fwds 510A (that is, the NCR-MT 520A handles the plurality of NCR-Fwds 510A), the on/off configuration information may include information for configuring on/off during RRC connection recovery for each of the plurality of NCR-Fwds 510A. For example, the NCR-MT 520A may receive the on/off configuration information for designating whether the NCR-Fwd 510A is turned off during the RRC connection recovery procedure from the cell a. When the on/off configuration information indicates to turn off the NCR-Fwd 510A during the RRC connection recovery procedure, the NCR apparatus 500A may turn off the NCR-Fwd 510A in response to the start of the RRC connection recovery procedure. The on/off configuration information may be broadcast by SIB from the cell b (the gNB 200b).

The NCR control signal may include configuration information indicating to turn on the NCR-Fwd 510A and the area information indicating the valid area of the configuration information, similar to the second variation of the first embodiment. When the cell b does not belong to the valid area, the NCR apparatus 500A may turn off the NCR-Fwd 510A in response to the start of the RRC connection recovery procedure. When the cell b belongs to the valid area, the NCR apparatus 500A may maintain the NCR-Fwd 510A on even when the RRC connection recovery procedure starts.

The gNB 200b managing the cell b may acquire from the gNB 200a managing the cell a the configuration information that the gNB 200a configures in the NCR apparatus 500A, similar to the third variation of the first embodiment.

### (3) Third Embodiment

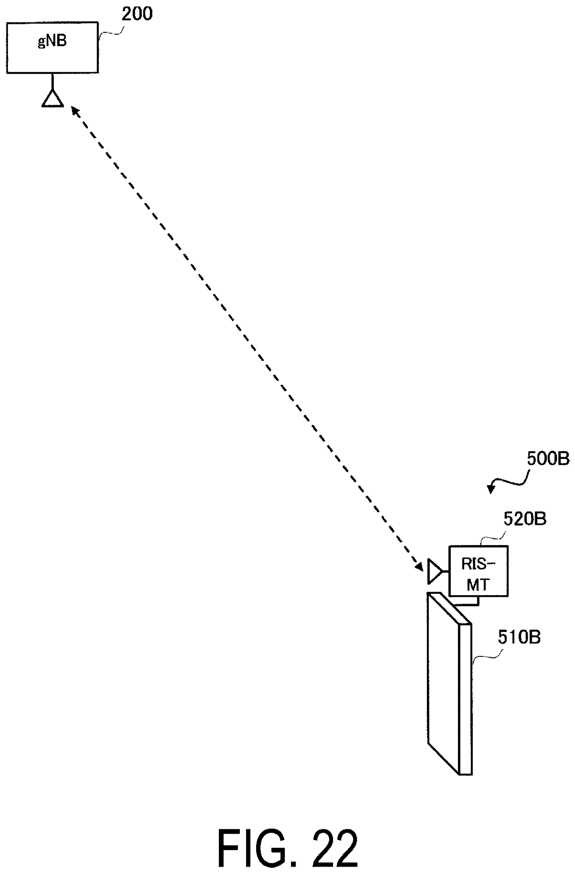

Next, differences between a third embodiment and the above-described embodiments will be mainly described. As illustrated in FIG. 22, a relay apparatus according to the third embodiment is a reconfigurable intelligent surface (RIS) apparatus 500B that changes a direction in which an incident radio wave (radio signal) propagates through reflection or refraction. The "NCR" in the above-described embodiments may be read as the "RIS".

The RIS is a type of a relay device (hereinafter, also referred to as a "RIS-Fwd") capable of performing beamforming (directivity control) in a similar way to the NCR by changing the characteristics of metamaterials. The RIS may be able to change a range (distance) of a beam by controlling a reflection direction and/or a refraction direction of each unit element. For example, the RIS may have a configuration capable of controlling the reflection direction and/or refraction direction of each unit element, and focusing on a near UE (directing a beam) or focusing on a far UE (directing a beam).

The RIS apparatus 500B includes a new UE (hereinafter referred to as "RIS-MT") 520B that is a control terminal for controlling RIS-Fwd 510B. The RIS-MT 520B controls the RIS-Fwd 510B in cooperation with the gNB 200 by establishing a wireless connection to the gNB 200 and performing wireless communication with the gNB 200. The RIS-Fwd 510B may be a reflective RIS. Such an RIS-Fwd 510B reflects an incident radio wave to change a propagation direction of the radio wave. Here, a reflection angle of the radio wave can be variably set. The RIS-Fwd 510B reflects radio waves incident from the gNB 200 toward the UE 100. The RIS-Fwd 510B may be a transmissive RIS. Such an RIS-Fwd 510B refracts an incident radio wave to change the propagation direction of the radio wave. Here, a refraction angle of the radio wave can be variably set.

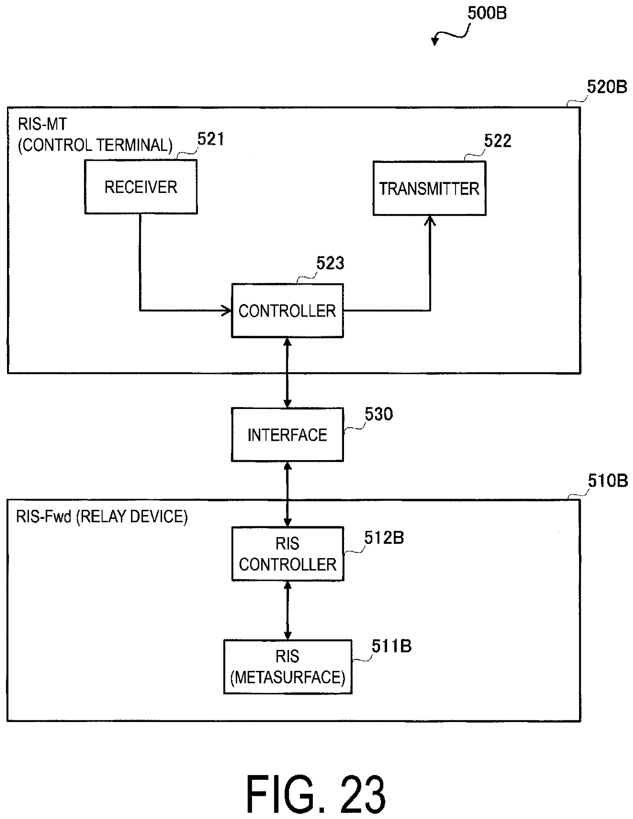

FIG. 23 is a diagram illustrating an example of a configuration of the RIS-Fwd (relay device) 510B and the RIS-MT (control terminal) 520B according to the third embodiment. The RIS-MT 520B has a receiver 521, a transmitter 522, and a controller 523. Such a configuration is the same as that of the above-described embodiment. The RIS-Fwd 510B includes a RIS 511B and a RIS controller 512B. The RIS 511B is a metasurface configured using a metamaterial. For example, RIS 511B is configured by disposing extremely small structures relative to the wavelength of radio waves in an array, and the direction and/or beam shape of the reflected waves can be arbitrarily designed by making the structures different shapes depending on their disposition location. The RIS 511B may be a transparent dynamic metasurface. The RIS 511B may be configured by stacking a transparent glass substrate on transparent version of a metasurface substrate on which a large number of small structures are regularly disposed, and may be capable of dynamically controlling three patterns of a mode of transmitting an incident radio wave, a mode of transmitting a part of a radio wave and reflecting a part thereof, and a mode of reflecting all radio waves by minutely moving the stacked glass substrate. The RIS controller 512B controls the RIS 511B in response to a RIS control signal from the controller 523 in the RIS-MT 520B. The RIS controller 512B may include at least one processor and at least one actuator. The processor interprets a RIS control signal from the controller 523 in the RIS-MT 520B to drive the actuator in response to the RIS control signal.

### (4) Other Embodiments

In the first embodiment described above, an example in which the NCR-MT 520A in the RRC inactive state or the RRC idle state performs the cell reselection has been described. In the second embodiment described above, an example in which the NCR-MT 520A in the RRC inactive state or the RRC idle state performs the RRC connection procedure (the RRC connection recovery procedure or the RRC connection establishment procedure) has been described. However, the operations according to the embodiments and their variations described above may be applied to a handover that is performed by the NCR-MT 520A in the RRC connected state. For example, the cell reselection in the first embodiment described above may be read as a handover. The RRC connection procedure (the RRC connection recovery procedure or the RRC connection establishment procedure) in the second embodiment described above may be read as a handover.

In the above-described embodiment, an example in which the relay apparatus performing relay transmission is the NCR apparatus 500A or a RIS apparatus 500B has been described. However, the relay apparatus that performs relay transmission is not limited to the NCR apparatus 500A or the RIS apparatus 500B, and may be an integrated access and backhaul (IAB) node defined in the technical specifications of 3GPP.

Each of the above-described operation flows is not limited to being performed separately and independently, but can be performed by combining two or more operation flows. For example, some steps of one operation flow may be added to another operation flow or some steps of one operation flow may be replaced with some steps of another operation flow. In each flow, all steps may not be necessarily performed, and only some of the steps may be performed.

In the above-described embodiment, an example in which the base station is an NR base station (gNB) has been described, but the base station may be an LTE base station (eNB). The base station may be a relay node such as an IAB node. The base station may be a distributed unit (DU) of the IAB node. Further, the UE 100 may be a mobile termination (MT) of the IAB node.

Further, the term "network node" mainly means a base station, but may also mean a core network apparatus or a part (CU, DU, or RU) of a base station. The network node may be configured by a combination of at least a part of a core network apparatus and at least a part of a base station.

A program for causing a computer to execute each of the processes performed by the communication apparatus according to the embodiment described above, such as the UE 100 (NCR-MT 520A and RIS-MT 520B), the gNB 200, or the relay apparatus, may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, and may be, for example, a recording medium such as a CD-ROM or a DVD-ROM. Further, a circuit that executes each process performed by the UE 100, the gNB 200, or the relay apparatus may be integrated, and at least some of the UE 100, the gNB 200, and the relay apparatus may be configured as a semiconductor integrated circuit (a chipset or system on a chip (SoC)).

Functions realized by the UE 100, the gNB 200 (network node), or the relay apparatus may be implemented in circuitry or processing circuitry that includes a general-purpose processor, a special-purpose processor, an integrated circuit, an application specific integrated circuit (ASIC), a central processing unit (CPU), conventional circuit, and/or combinations thereof programmed to realize the described functions. The processor may include transistors and other circuits and may be considered as the circuitry or processing circuitry. The processor may be a programmed processor that executes a program stored in a memory. Circuitry, unit, and means herein are hardware programmed to realize the described functions, or hardware executing the functions. The hardware may be any hardware disclosed herein or any hardware programmed to realize or known to execute the described functions. When the hardware is a processor that is considered to be a type of circuitry, the circuitry, means, or unit is a combination of hardware with software used to configure the hardware and/or processor.

The phrases "based on" and "depending on/in response to" used in the present disclosure do not mean "based only on" and "only depending on/in response to" unless specifically stated otherwise. The phrase "based on" means both "based only on" and "based at least in part on." The phrase "depending on" means both "only depending on" and "at least partially depending on." The terms "include," "comprise" and variations thereof do not mean "include only items stated" but instead mean "may include only items stated" or "may include not only the items stated but also other items." The term "or" used in the present disclosure is not intended to be "exclusive or." Further, any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a," "an," and "the" are added in the present disclosure through translation, these articles include the plural unless clearly indicated otherwise in context.

The embodiments have been described above in detail with reference to the drawings, but specific configurations are not limited to those described above, and various design variation can be made without departing from the gist of the present disclosure.

This application claims priority to US Provisional Patent Application No. 63/445096 (filed February 13, 2023), the contents of which are incorporated herein by reference in their entirety.

### (5) Supplements

Features relating to the embodiments described above are described below as supplements.

### (Supplement 1)

A communication method using a relay apparatus including a relay device configured to perform a relay operation of relaying a radio signal transmitted between a network and a user equipment, and a control terminal configured to receive a control signal used for control of the relay device from the network, the communication method including the steps of:
performing, by the control terminal, cell reselection to a second cell different from a first cell, when the control terminal is in a radio resource control (RRC) idle state or an RRC inactive state in the first cell and the relay device is on, and
turning off, by the relay apparatus, the relay device based on the cell reselection.

### (Supplement 2)

The communication method according to supplement 1, further including the steps of: holding, by the relay apparatus, the control signal received from the first cell, when the control terminal is in the RRC idle state or the RRC inactive state in the first cell; and discarding, by the control terminal, the control signal held by the control terminal, in response to the cell reselection.

### (Supplement 3)

The communication method according to supplement 1 or 2, further including the steps of: transitioning, by the control terminal, to the RRC connected state in the second cell, after the cell reselection; and
receiving, by the control terminal that has transitioned to the RRC connected state in the second cell, a new control signal related to the relay operation from the second cell.

### (Supplement 4)

The communication method according to supplement 3, further including the step of: controlling, by the relay apparatus, the relay operation based on the control signal received from the second cell.

### (Supplement 5)

The communication method according to any one of supplements 1 to 4, further including: receiving, by the control terminal, configuration information from the first cell, the configuration information designating whether to turn off the relay device during cell reselection,
wherein the turning off includes a turning off the relay device in response to the cell reselection, when the configuration information indicates to turn off the relay device during the cell reselection.

### (Supplement 6)

The communication method according to any one of supplements 1 to 5, wherein
the control signal includes information indicating to turn off the relay device is to be turned off and area information indicating a valid area of the information, and
the turning off includes turning off the relay device in response to the cell reselection, when the second cell does not belong to the valid area.

### (Supplement 7)

The communication method according to supplement any one of supplements 1 to 6, further including:
acquiring, by a second network node managing the second cell, configuration information from a first network node managing the first cell, the configuration information being configured by the first network node for the relay apparatus.

### (Supplement 8)

The communication method according to supplement 7, further including:
transmitting, by the second network node, a notification to the first network node, the notification indicating a result of determining whether the configuration information is valid in the second cell based on the acquired configuration information.

### (Supplement 9)

A relay apparatus including:
a relay device configured to perform a relay operation of relaying a radio signal transmitted between a network and a user equipment; and
a control terminal configured to receive a control signal used for control of the relay device from the network,
wherein the control terminal:
   performs cell reselection to a second cell different from a first cell, when the control terminal is in a radio resource control (RRC) idle state or an RRC inactive state in the first cell and the relay device is on; and
   turns off the relay device based on the cell reselection.

### (6) Supplements

### 1. Introduction

In RAN #97e, a work item for the network-controlled repeater (NCR) has been approved. RAN2 #119bis-e and RAN2 #120 have achieved significant progress with many agreements.

In this supplement, remaining open/potential problems of RAN2 regarding the NCR are discussed.

2. Discussion

### 2.1. NCR-Fwd ON/OFF Related Matters

### 2.1.1. Open Issue Related to RRC Release

In the RAN2 #120, the following agreement was obtained.

For NCR-Fwd ON/OFF:
When NCR-MT is in the RRC connected mode, NCR-Fwd can be turned ON or OFF in accordance with the side control information received from the gNB.
After the NCR-MT enters the RRC inactive mode, the NCR-Fwd can be turned ON or OFF in accordance with the last configuration received from the gNB.

Further study is needed for release to the RRC idle state.

RLF of the NCR-MT:
After the NCR-MT declares RLF, the NCR-MT performs cell selection and triggers RRC re-establishment;
NCR-Fwd is OFF when no suitable cell is found and the NCR-MT is in an RRC idle state;
During the RRC re-establishment procedure, NCR-Fwd is OFF.

One unsolved problem is whether it is a valid case for the gNB to release the NCR-MT to the idle state. According to the discussion in RAN2 #120, there are two camps below for the RRC state of the NCR-MT:

Assumption 1: NCR-MT is basically connected:
In this assumption, the gNB will not release the NCR-MT because the NCR must always be controllable by the network. Therefore, there is a possibility that the NCR-MT is in the idle state only at an initial access (power ON) or RLF (to be precise, during RRC re-establishment failure). Since a state of the NCR-Fwd due to initial access is clear (that is, the NCR-Fwd is to be OFF) and the state due to RLF has already been agreed (that is, the NCR-Fwd is also to be OFF), no additional NCR operation needs to be defined when the gNB releases the NCR-MT to the idle state.

Assumption 2: The gNB can release NCR-MT:
In this assumption, since the RRC idle state has already been agreed upon by the RAN2, the gNB can release the NCR-MT for NCR power saving, signaling overhead reduction, and the like. Accordingly, the NCR-MT may become idle due to all legacy conditions such as initial access, RLF, and RRC release. Some companies have stated that after transitioning to the idle state, the NCR-Fwd is likely to fall back to a legacy RF repeater.

Observation 1: There were two arguments related to whether an ON/OFF operation of the NCR-Fwd needs to be defined, for whether the gNB is to return the NCR-MT to the idle state.

Assumption 1 is very simple because the NCR is always network controlled by the side control information and RRC signaling and there is no reason for the gNB to release the NCR-MT in a normal state. However, in smart gNB implementation, the NCR-MT may be released under specific conditions, such as power savings and signaling overhead reduction, similar to assumption 2. In this sense, a specification should allow for various gNB implementations, and an operation of the NCR during idle state according to RRC release should be generally clarified.

Observation 2: In normal operation, there is no reason for the gNB to put the NCR-MT in the idle state, but the RRC release may be permitted depending on the implementation of the gNB under specific conditions.

On the other hand, for the operation of the NCR in the inactive state, after RAN2 enters WA: NCR-MT into the RRC inactive mode, NCR-Fwd can be turned ON or OFF in accordance with a configuration last received from the gNB. That is, since the gNB can always page the NCR-MT through RAN paging, it is reasonable to align the operation of the NCR with that of the connected (that is, "no specific function enhancement"), as agreed upon by RAN2. It will be appreciated that the NCR-MT in an idle state cannot be controlled by the gNB since CN paging is required to establish an RRC connection for transmitting the side control information and the configuration. Therefore, the operation of the NCR in the idle state needs to be considered separately from the inactive state.

Observation 3: The operation of the NCR-Fwd in the inactive state is consistent with the operation in the connected state and should be different from the operation of the NCR-Fwd in the idle state.

In addition, as described in Assumption 2 above, when the NCR is not controlled by the gNB, the inventors consider that the NCR is likely to fall back to the legacy RF repeater. Since the RAN2 agrees that "the NCR-Fwd can be turned ON or OFF in accordance with the last configuration received from the gNB", it is clear that the inactive NCR cannot fall back to the legacy RF-repeater. In other words, the possibility of fallback to the legacy RF repeater is available only when the NCR-MT is in the idle state.

The legacy RF repeater is an implementation technology in terms of network control. Thus, when the NCR falls back to the legacy RF repeater, this is no longer a network-controlled repeater. In other words, when a node is no longer NCR (for example, when an NCR-MT transitions to an idle state), the operation of the NCR may be anything depending on the implementation.

Observation 4: According to current agreement, an NCR in an inactive state cannot fall back to the legacy RF repeater. That is, the last configuration received from the gNB must be followed, as agreed upon by the RAN2.

Observation 5: When the NCR is not controlled by the gNB (for example, when the NCR-MT transitions to the idle state), the node is likely not to be considered as an NCR from the perspective of network control.

As discussed in Observations 2 and 3, the operation of the NCR in the idle state according to the RRC release should be clarified and be different from that in the inactive state in order to enable various gNB implementations.

As described above, the RAN2 has already agreed upon "when no suitable cell is found and the NCR-MT is in the RRC idle state, the NCR-Fwd will be OFF" for the operation of the NCR due to the RLF. On this agreement, there is no significant reason to distinguish the transition to the idle state due to RRC release according to the RLF. Therefore, when the NCR-MT transitions to the idle state, the NCR-Fwd is to be OFF regardless of a cause of the state transition.

Since this operation does not preclude an implementation-specific operation, the node can operate as the legacy RF repeater (that is, "fallback" operation) even when the node is not considered as the NCR (such as when the NCR-MT is idle).

Proposal 1: The RAN2 should agree to turn the NCR-Fwd OFF when the NCR-MT is released to the idle state, as in the case of the RLF.

### 2.1.2. Potential Problems with RRC Re-establishment

Currently, the RAN2 agreement only assumes that the NCR-MT is always in the same cell. However, the NCR-MT is likely to change the serving cell/camping cell due to a radio state such as FR2 blockage even though NCR mobility is not supported. Therefore, when a cell with a different NCR-MT is (re-)selected, it is worth discussing what happens.

### RAN2 #120 agreed to the following description.

For NCR-MT RLF:
After the NCR-MT declares RLF, the NCR-MT performs cell selection and triggers RRC re-establishment;
NCR-Fwd is OFF when no suitable cell is found and the NCR-MT is in an RRC idle state; During the RRC re-establishment procedure, NCR-Fwd is OFF.

For RRC re-establishment, the following steps and potential problems are identified in accordance with the agreement:
Step 1: The NCR-MT declares the RLF and starts cell selection and RRC re-establishment. During these procedures, NCR-Fwd is OFF as already agreed.
Step 2a: When the NCR-MT selects the same cell and the RRC re-establishment is successfully completed, the NCR-Fwd returns to ON in accordance with the last configuration.
Step 2b: When the NCR-MT selects a different cell and the RRC re-establishment is successfully completed, it is determined whether the NCR-Fwd is to be turned OFF.

For the potential problem of step 2a, since NCR has a configuration provided by the same cell, the NCR-Fwd is generally considered to be able to resume operation with the last configuration. In this case, signaling overhead for reconfiguring the NCR can be avoided.

On the other hand, since the RLF has occurred in the NCR-MT, the gNB may not prioritize such automatic resumption of the NCR-Fwd operation and, for example, in such a case, the gNB is likely to change the NCR configuration. Therefore, explicitly indicating whether the gNB is to resume the operation of the NCR-Fwd with the last configuration or turn the NCR-Fwd OFF is, for example, an option as to whether to perform RRC reconfiguration in advance or to perform RRC re-establishment in time.

As another option, NCR-Fwd may be considered to be OFF even after a successful RRC re-establishment to the same cell. This is either a hard-coded definition or an indication of the gNB as described above. In this case, when the NCR-MT declares the RLF (or starts the RRC re-establishment procedure), the last RRC configuration (and the last indication using the side control information) is to be discarded.

Proposal 2: The RAN2 should discuss whether NCR-Fwd will resume operation with the last configuration when RRC re-establishment to the same cell is successful.

For the potential problem of step 2b, the last configuration of the NCR-MT is provided by the last serving cell and not by the new cell. Therefore, it is easy for the NCR to be provided with a new configuration from the new cell. In this case, the NCR-MT needs to discard the last RRC configuration (and the last indication using the side control information) when selecting a different cell (or when transmitting an RRC re-establishment request towards a different cell).

Proposal 3: The RAN2 should discuss whether the NCR-MT will discard the last configuration when RRC re-establishment to a different cell is started.

### 2.1.3. Potential Problem with Cell Reselection

In the RAN2 #120, the following agreement was made.

The NCR-MT essentially supports cell reselection and RRM measurement in the RRC idle state and the RRC inactive state.

In Rel-18, the NCR-MT does not support handover and RRM measurement in the RRC connected state.

One potential problem with the cell reselection is priority processing for a specific cell. For the legacy RF repeater, deployment is determined by network planning and/or RF measurement on site. Thus, it is assumed that a desired cell(s) is planned for each NCR, that is, network planning determines a relationship between the serving cell and the NCR. Such a desired cell is likely to be set to the NCR by the OAM.

Observation 6: The NCR can configure the desired cell, for example, by OAM.

In this case, the NCR-MT is to avoid camping (or connecting) on the undesired cell. Therefore, the NCR-MT is to prioritize desirable cells over undesirable cells. While cell selection broadly allows implementation-specific operations (that is, the IAB-MT selects any suitable cell as long as the cell is appropriate), cell reselection consists of a set of deterministic operations according to a specification (inter-frequency cell reselection criterion, ranking, or the like). Therefore, standard support is required to ensure network planning of the NCR.

The simplest approach is to enhance priority processing of cell reselection. The NCR-MT may prioritize the desired cell, similarly to an MBS frequency or a side link frequency (priority may vary depending on the preference of the UE). This enhancement allows the NCR-MT to constantly make measurement to attempt to reselect the desired cell, and to minimize the possibility of camping on/connecting to undesired cells.

Another aspect is to define an NCR-specific offset for intra-frequency cell reselection (that is, within an R criterion). This is because the ranking is likely to cause the NCR-MT to reselect an undesired cell on the same frequency when the inventors consider that the NCR is likely to be deployed at a cell edge (that is, a coverage of a macro cell is likely to be extended).

Proposal 4: The RAN2 should discuss whether the NCR-MT is allowed to prioritize the desired cell (that is, the cell of interest) in the cell reselection procedure.

Another potential problem is for mobility in the inactive mode. The RAN2 agreed that "after the NCR-MT transitions to the RRC inactive mode, the NCR-Fwd can be turned ON or OFF in accordance with the last configuration received from the gNB". Based on this agreement, after the NCR-MT becomes inactive, the NCR-MT is likely to reselect to a different cell due to, for example, interruption of the FR2. When NCR-Fwd is OFF, there is no problem, but when NCR-Fwd is ON, the same problem as that described in section 2.1.2 is likely to occur.

Observation 7: When NCR-MT is inactive in a state in which NCR-Fwd is ON, a different cell is likely to be reselected.

In this scenario, it is necessary to clarify how the NCR is to operate. Possible options are as follows:
Option 1: NCR-Fwd remains ON at the last configuration based on current agreement matters.
Option 2: NCR-Fwd is turned OFF (or NCR-MT discards the last configuration), similar to Proposal 3 above.

Since option 1 is the same as an agreement matter that "after the NCR-MT has entered the inactive mode, the NCR-Fwd can be turned ON or OFF in accordance with the configuration last received from the gNB", and "WA: RRC inactive is freely supported without specific function enhancement", option 1 may be efficient in that standardization efforts are minimized.

Option 2 is considered a reasonable operation from a technical perspective. This is because the configuration has been provided by another cell (that is, the last serving cell) and it is somewhat unnatural for the NCR-Fwd to operate in a configuration that a current cell is not recognized. This is because the reselected cell is likely to have different resources available for NCR. Therefore, taking option 2 can be said to be a fail-safe mechanism since the RAN2 also agrees that the cell reselection is a mandatory support.

Based on the above discussion, option 2 is more desirable from the perspective of technical rationality.

Proposal 5: The RAN2 should discuss whether the NCR-Fwd should be turned OFF when the NCR-MT reselects to a different cell.

Yet another potential problem is when the NCR-MT connects to an undesired cell after cell reselection or RRC re-establishment. In terms of the NCR, it is necessary to reconnect to the desired cell. From the perspective of the gNB, RRC connection with the NCR-MT ultimately makes no sense. RAN2 has already agreed that "NCR-MT does not support handover". Therefore, the only method the gNB can perform is to release the NCR-MT, but it is not guaranteed that the NCR-MT will camp on/reconnect to the desired cell because the NCR-MT will follow the cell reselection procedure after transitioning to the idle state. In this case, redirection is likely to be enhanced to cause the NCR-MT to camp on the desired cell. However, there remains a question as to whether the gNB can acquire the desired cell of the NCR (for example, a cell set by the OAM).

Proposal 6: The RAN2 should discuss whether to enhance redirection in order to move the NCR-MT from a desired cell to a desired cell (that is instead of handover).

### 2.2. Access Control Problem

### 2.2.1. Open Issue on NPN Support

In RAN2 #120, the following was agreed upon according to matters to be considered:
An NCR support indication is introduced to each PLMN in SIB1.

The inventors consider that NCR deployment in NPN is also beneficial and has potential market demand. For example, NPN frequencies are planned in high bands of FR1 (4.9 GHz) and FR2 (28 GHz) in Japan. In such frequencies, the coverage expansion by NCR is often important. As another example, NPN is likely to exhibit higher performance in a URLLC use case such as a smart factory due to its local/closed area nature. In such cases, low-latency repeaters are more suitable than high-latency relays.

From a specification perspective, the NCR support indication is assumed to be a one-bit indication added to each entry of the PLMN Identity Info List in SIB1, similar to the IAB support indication. In order to support NCR with NPN, it is only necessary to add the same indication to each entry of the NPN identity info list, similar to IAB. Therefore, standardization effort is expected to be minimal (near zero). Further, in a PLMN network, no signaling overhead occurs (that is, the NPN identity info list does not exist in such a network since the list is an arbitrary IE).

In addition, the RAN2 has already agreed to the following statement, which clearly indicates that NCR is supported in NPN.

NPN-capable NCR-MT should consider cellReservedForOtherUse for NPN-only cell determination.

In light of the above, the inventors consider that no "artificial" restriction is necessary for NCR introduction in NPN. Therefore, the RAN2 should confirm that NCR is supported in NPN, which will resolve the previous consideration matters.

Proposal 7: The RAN2 should confirm that NCR is supported in NPN. Therefore, NCR support indication is also added to each entry in the NPN identity list in SIB1.

### 2.2.2. Potential Problems with PRACH Resources

In IAB, a specific PRACH scene (RO) can be provided to avoid possible collision. Opportunities thereof are defined in the following IE to extend the common configuration of the UE.

Since the NCR is considered a network node like the IAB node, PRACH collision with the UE is also to be avoided. For the UE in the extended coverage provided by the NCR, the preamble transmitted by the UE is forwarded to the gNB by the NCR, whereas in the case of IAB, the preamble transmitted by the UE is terminated by the IAB node. Therefore, the inventors consider this to be a more serious problem for the NCR. Therefore, the inventors consider this to be a more serious problem for the NCR in terms of PRACH collision at the gNB receiving side.

In this sense, it is worth considering whether PRACH resources separated from the UE is to be provided to the NCR-MT. When this is necessary, further consideration is required as to whether the separate PRACH resources are defined by separate ROs (as in Rel-16 IAB) or defined by PRACH partitioning (that is, as part of Rel-17 RedCap, SDT, slicing, and Feature Combination Preambles defined for coverage extension).

Proposal 8: The RAN2 should discuss whether to define individual PRACH resources specific to NCR-MT.

### REFERENCE SIGNS

1: Mobile communication system
100: UE
200: gNB
210: Transmitter
220: Receiver
230: Controller
240: Backhaul communicator
500A: NCR apparatus
510A: NCR-Fwd
520A: NCR-MT
500B: RIS apparatus
510B: RIS-Fwd
520B: RIS-MT
511A: Wireless unit
511 a: Antenna
511b: RF circuit
511c: Directivity controller
512A: NCR controller
512B: RIS controller
521: Receiver
522: Transmitter
523: Controller
530: Interface

## Claims

1. A communication method using a relay apparatus comprising a relay device configured to perform a relay operation of relaying a radio signal transmitted between a network and a user equipment, and a control terminal configured to receive a control signal used for control of the relay device from the network, the communication method comprising the steps of:
causing the relay device to continue the relay operation, when the control terminal transitions from a radio resource control (RRC) connected state to an RRC idle state or an RRC inactive state in a first cell;
performing, by the control terminal, cell reselection to a second cell different from the first cell, when the control terminal is in the RRC idle state or the RRC inactive state in the first cell; and
causing, by the relay apparatus, the relay device to stop the relay operation, based on the cell reselection.

2. The communication method according to claim 1, further comprising the steps of:
holding, by the relay apparatus, the control signal received from the first cell, when the control terminal is in the RRC idle state or the RRC inactive state in the first cell; and
discarding, by the control terminal, the control signal held by the control terminal, in response to the cell reselection.

3. The communication method according to claim 1 or 2, further comprising the steps of:
transitioning, by the control terminal, to the RRC connected state in the second cell, after the cell reselection; and
receiving, by the control terminal that has transitioned to the RRC connected state in the second cell, a new control signal related to the relay operation from the second cell.

4. The communication method according to claim 3, further comprising:
controlling, by the relay apparatus, the relay operation based on the control signal received from the second cell.

5. The communication method according to claim 1 or 2, further comprising:
receiving, by the control terminal, configuration information from the first cell, the configuration information designating whether to cause the relay device to stop the relay operation during cell reselection,
wherein the causing the relay device to stop the relay operation comprises causing the relay device to stop the relay operation in response to the cell reselection, when the configuration information indicates to cause the relay device to stop the relay operation during the cell reselection.

6. The communication method according to claim 1, wherein
the control signal comprises information indicating to cause the relay device to continue the relay operation and area information indicating a valid area of the information, and
the turning off comprises causing the relay device to stop the relay operation in response to the cell reselection, when the second cell does not belong to the valid area.

7. The communication method according to claim 1, further comprising:
acquiring, by a second network node managing the second cell, configuration information from a first network node managing the first cell, the configuration information being configured by the first network node for the relay apparatus.

8. The communication method according to claim 7, further comprising:
transmitting, by the second network node, a notification to the first network node, the notification indicating a result of determining whether the configuration information is valid in the second cell based on the acquired configuration information.

9. A relay apparatus comprising:
a relay device configured to perform a relay operation of relaying a radio signal transmitted between a network and a user equipment; and
a control terminal configured to receive a control signal used for control of the relay device from the network,
wherein the control terminal:
causes the relay device to continue the relay operation, when the control terminal transitions from a radio resource control (RRC) connected state to an RRC idle state or an RRC inactive state in a first cell;
performs cell reselection to a second cell different from the first cell, when the control terminal is in the RRC idle state or the RRC inactive state in the first cell; and
causes the relay device to stop the relay operation, based on the cell reselection.
